# EUROPEAN PATENT APPLICATION

(11) **EP 3 500 011 A1**
(43) Date of publication of application: **19.06.2019**
(21) Application number: 17838832.8
(22) Date of filing: 11.08.2017
(51) Int. Cl.: H04W 72/04

(54) **INFORMATION TRANSMISSION METHOD, TRANSMISSION NODE, AND TRANSMISSION SYSTEM**

(30) Priority: 12.08.2016 CN 201610666675
(71) Applicant: ZTE Corporation, Shenzhen, Guangdong 518057 (CN)
(72) Inventor: YANG, Ling, Shenzhen Guangdong 518057 (CN); ZHAO, Yajun, Shenzhen Guangdong 518057 (CN)
(74) Representative: Aipex B.V.
(86) International application number: PCT/CN2017/097252
(87) International publication number: WO 2018/028702

(57) **Abstract**

Disclosed is an information transmission method. The method includes: performing information segmentation on predetermined information to form information segments; and transmitting the information segments using a predetermined spectrum. Also disclosed are an information transmission system and a transmission node.

## Description

### TECHNICAL FIELD

The present invention relates to, but is not limited to, wireless communications and, in particular, to an information transmission method, a transmission node and a transmission system.

### BACKGROUND

With increasing improvement of the commercialization of a 4th Generation mobile communication technology (4G) long-term evolution (LTE)/long-term evolution advance (LTE-Advanced/LTE-A) system, the 5th Generation mobile communication technology (5G) is facing higher technical requirements. It is widely believed in the industry that the next-generation mobile communication system should have features such as an ultra-high speed, ultra-high capacity, ultra-high reliability, and ultra-low-latency transmission. Machine type communications (MTC) (also referred to as machine to machine (M2M)) and narrowband Internet of Things (NB-IoT) are primary application forms of the Internet of Things at the current stage. At present, the extension of this technology in 5G has been being researched, which is called massive machine type communication (mMTC).

This type of communication system is characterized by a narrower bandwidth, such as, 1.4MHz, 200kHz, etc. A large number of user equipments (UEs) include conventional handheld terminals and machines, sensor terminals and the like, and have coverage enhancement requirements. For a cellular-based NB-IoT system, a transmission bandwidth and uplink subcarrier spacing are respectively 180kHz and 3.75kHz. The transmission bandwidth is the same as a bandwidth of one physical resource block in an LTE system, but the uplink subcarrier spacing is different from subcarrier spacing in the LTE system. The object of such a design is to enhance or improve the coverage. In view of this, for the uplink subcarrier spacing of 3.75kHz, a corresponding slot length becomes 2ms while one slot length in LTE is 0.5ms, so that a transmission duration corresponding to a resource unit (RU) is 32ms. If the NB-IoT system or a system having features similar with NB-IoT in 5G is applied on an unlicensed carrier, the transmission duration of one RU or the transmission duration corresponding to one time of schedule transmission exceeds the regulatory requirement of a maximum transmission duration in the unlicensed carrier. Therefore, it is necessary to consider a method of satisfying the regulatory requirement for the maximum transmission duration in the unlicensed carrier. On the unlicensed carrier, the maximum transmission duration of a downlink is 8ms or 10ms, and the maximum transmission duration of an uplink is 4ms.

When the channel condition is poor, a probability of listen-before-talk (LBT) failure is relatively high, so that during the repeated transmission, a transmission device fails to perform a scheduled repeated transmission on the unlicensed carrier due to the LBT failure. Therefore, it is necessary to consider a method of improving the coverage capability on the unlicensed carrier. In view of the above problem, no effective solution has yet been proposed.

### SUMMARY

The following is the summary of the subject matter described herein in detail. This summary is not intended to limit the scope of the claims.

Embodiments of the present invention provide an information transmission method, a transmission node and a transmission system.

An embodiment of the present invention provides an information transmission method. The method includes: performing information segmentation on predetermined information to form information segments; and transmitting the information segments using a predetermined spectrum.

In an embodiment, the predetermined spectrum includes one of an unlicensed spectrum, a shared spectrum and a licensed spectrum.

In an embodiment, the transmitting the information segments using a predetermined spectrum includes: performing a clear channel assessment (CCA) detection on the predetermined spectrum and acquiring N transmission units for transmitting the information segments; and transmitting the information segments respectively using the N transmission units.

In an embodiment, the performing a CCA detection on the predetermined spectrum, and acquiring N transmission units for transmitting the information segments includes: performing the CCA detection on the predetermined spectrum and acquiring the N transmission units for transmitting the information segments on one carrier or on a subcarrier.

In an embodiment, the performing the CCA detection on the predetermined spectrum and acquiring N transmission units for transmitting the information segments on one carrier or on one subcarrier includes: after transmitting by using m transmission units is completed, performing the CCA detection on the predetermined spectrum and acquiring transmission units for transmitting the information segments on the same carrier or on the same subcarrier, where m is a positive integer which is not greater than N.

In an embodiment, the method further includes: in response to not acquiring the transmission units for transmitting the information segments, continuously performing the CCA detection on the predetermined spectrum, or abandoning the current transmission or the transmission of the information segments.

In an embodiment, the performing a CCA detection on the predetermined spectrum and acquiring N transmission units for transmitting the information segments includes: performing the CCA detection on the predetermined spectrum and acquiring the N transmission units for transmitting the information segments on multi-carrier or on multi-subcarrier.

In an embodiment, the performing the CCA detection on the predetermined spectrum and acquiring the N transmission units on multi-carrier or on multi-subcarrier incudes: before transmitting the information segments, performing the CCA detection on the multi-carrier or on the multi-subcarrier and acquiring at least one of the multi-carrier and multi-subcarrier as the transmission units for transmitting the information segments.

In an embodiment, the performing a CCA detection on the predetermined spectrum and acquiring N transmission units for transmitting the information segments includes: performing the CCA detection on the predetermined spectrum and acquiring the N transmission units in a specific frequency domain resource.

In an embodiment, the performing the CCA detection on the predetermined spectrum and acquiring the N transmission units in a specific frequency domain resource includes: transmitting the information segments using the N transmission units on one of a resource block (RB), a resource block group (RBG), a sub-band, and one or more subcarriers in a specific bandwidth; transmitting the information segments using the N transmission units on one of multiple RBs, multiple RBGs, multiple sub-bands, and multiple specific bandwidths in which one or more subcarriers per specific bandwidth; transmitting the information segments using the N transmission units on one of an RB, an RBG, a sub-band, and a specific bandwidth; or transmitting the information segments using the N transmission units on one of multiple RBs, multiple RBGs, multiple sub-bands, and multiple specific bandwidths.

In an embodiment, the method further includes: in response to determining that a successful time of the CCA detection is earlier than a starting time of the transmission unit, transmitting an occupancy signal or a reservation signal in a blank resource between the successful time of the CCA detection and the starting time of the transmission unit.

In an embodiment, the method further includes: in response to determining that the successful time of the CCA detection is later than the starting time of the transmission unit, abandoning the current data transmission or transmitting the occupancy signal or the reservation signal in a blank resource between the successful time of the CCA detection and a starting time of a next transmission unit.

In an embodiment, the occupancy signal or the reservation signal is transmitted by a base station through an indication of a physical layer downlink control information (DCI) signaling. The physical layer DCI signaling includes one of: DCI format 0, DCI format 0A, DCI format 0B, DCI format 1, DCI format 1A, DCI format 1B, DCI format 1C, DCI format 1D, DCI format 2, DCI format 2A, DCI format 2B, DCI format 2C, DCI format 2D, DCI format 3, DCI format 3A, DCI format 4, DCI format 4A and DCI format 4B.

In an embodiment, a frequency domain position at which the occupancy signal or the reservation signal is transmitted includes one of: a specific frequency domain resource in an entire transmission bandwidth, a frequency domain resource corresponding to a scheduling resource in the entire transmission bandwidth, and a frequency domain recourse corresponding to the entire transmission bandwidth.

In an embodiment, the method further includes: different transmission nodes multiplexing the transmission units on the predetermined spectrum to perform the transmission. The multiplexing includes: the different transmission nodes multiplexing the transmission units on the predetermined spectrum in a time division multiplexing mode or multiplexing the transmission units on the predetermined spectrum in a frequency division multiplexing mode.

In an embodiment, the different transmission nodes multiplexing the transmission units on the predetermined spectrum to perform the transmission includes: puncturing or blanking at least one of a specific time domain resource and a specific frequency domain resource in the transmission unit of the transmission node which has occupied a channel, for the multiplexed transmission node to perform the CCA detection; reserving or blanking an interval between a previous transmission unit and a current transmission unit, for the multiplexed transmission node to perform the CCA detection; or transmitting a specific indication signal in the transmission unit, for the multiplexed transmission node to perform detection or identification.

In an embodiment, the specific indication signal includes at least one of: a demodulation reference signal (DMRS), a sounding reference signal (SRS), a cell-specific reference signal (CRS), a discovery reference signal (DRS), a primary synchronization signal (PSS), a secondary synchronization signal (SSS), a preamble and a predefined signal.

In an embodiment, the number of repeated transmissions on the predetermined spectrum is M1.

In an embodiment, the number of the repeated transmissions or the number of successful CCA detections performed on the unlicensed spectrum is M2; or the number of the CCA detections performed on the unlicensed spectrum is M2 no matter whether the CCA detection is successful on the unlicensed spectrum; where M2 is not greater than M1.

In an embodiment, the number of the repeated transmissions on the unlicensed spectrum is M1, and the number of the repeated transmissions on the licensed spectrum is M3, where M1 is greater than M3.

In an embodiment, the actual number of the repeated transmissions on the unlicensed spectrum depends on the number of successful listen-before-talks (LBTs).

In an embodiment, the number of the repeated transmissions on the predetermined spectrum is determined by one of the following ways: pre-defining, indicating through a physical layer control channel information (DCI) signaling, indicating through a higher layer radio resource control (RRC) signaling, and determining according to a statistical value within a period of time.

In an embodiment, the statistical value within a period of time includes one of: the number of failed LBTs within a period of time, the number of successful LBTs within a period of time, the number of successful repeated transmissions within a period of time, and the number of failed repeated transmissions within a period of time.

In an embodiment, in a process of the repeated transmission, in response to determining that the transmission is not enabled to be performed due to the failed LBT, the method further includes: indicating the number of failed LBTs in a secondary indication mode; or supplementing the number of the repeated transmissions.

In an embodiment, the secondary indication is transmitted at at least one of: a time after the current LBT fails; a time after all the repeated transmissions are completed; a time after an LBT first successes after the current LBT fails; a time when the number of failed LBTs reaches a predetermined threshold; and a time point at which the secondary indication is transmitted periodically.

In an embodiment, a starting point of a transmission of an information segment or a starting point of a repeated transmission of an information segment includes: a fixed starting point position or a dynamic starting point position.

In an embodiment, the fixed starting point position includes that: between an ending of a previous transmission and a starting of a current transmission is consecutive in a time domain; or between the ending of the previous transmission and the starting of the current transmission has an offset in the time domain.

In an embodiment, the fixed starting point position or the offset is notified by a physical layer control channel information (DCI) signaling, is notified by a higher layer RRC signaling, is predefined, or is pre-determined by a base station and a user equipment (UE) in advance.

In an embodiment, the dynamic starting point position includes: determining the starting point of the transmission according to a successful time of performing LBT in a time window; randomly selecting one of a plurality of predefined transmission starting points as the starting point of the transmission in the time window; fixing one of the plurality of predefined transmission starting points as the starting point of the transmission in the time window; or determining the starting point of the transmission according to the successful time of LBT.

In an embodiment, the time window is located in a transmission unit, the time window is located before a repeated transmission unit, the time window is located after a repeated transmission unit, or the time window contains a repeated transmission unit.

In an embodiment, a position of the time window is determined by one of following ways: notifying through a physical layer control channel information (DCI) signaling, notifying through a higher layer RRC signaling, predefining, and pre-determining by a base station and a UE in advance.

In an embodiment, the repeated transmission includes: performing the repeated transmission according to the transmission units; performing the repeated transmission with (Z times M) basic units as a repetition period; or performing circular and repeated transmission based on a redundancy version (RV).

An embodiment of the present invention further provides an information transmission method. The method includes: determining a regulatory duration of an unlicensed spectrum; and according to the regulatory duration, determining a size of a transport block for performing data transmission by using the unlicensed spectrum.

An embodiment of the present invention further provides an information transmission method. The method includes: in response to determining that a successful time of a clear channel assessment (CCA) detection is earlier than a starting time of a transmission unit, transmitting an occupancy signal or a reservation signal in a blank resource between the successful time of the CCA detection and the starting time of the transmission unit.

In an embodiment, the method further includes: in response to determining that the successful time of the CCA detection is later than the starting time of the transmission unit, abandoning a current data transmission or transmitting the occupancy signal or the reservation signal in the blank resource between the successful time of the CCA detection and a starting time of a next transmission unit.

In an embodiment, the occupancy signal or the reservation signal is transmitted by a base station through an indication of a physical layer downlink control information (DCI) signaling. The physical layer DCI signaling includes one of: DCI format 0, DCI format 0A, DCI format 0B, DCI format 1, DCI format 1A, DCI format 1B, DCI format 1C, DCI format 1D, DCI format 2, DCI format 2A, DCI format 2B, DCI format 2C, DCI format 2D, DCI format 3, DCI format 3A, DCI format 4, DCI format 4A and DCI format 4B.

In an embodiment, a frequency domain position at which the occupancy signal or the reservation signal is transmitted includes one of: a specific frequency domain resource in an entire transmission bandwidth, a frequency domain resource corresponding to a scheduling resource in the entire transmission bandwidth, and a frequency domain recourse corresponding to the entire transmission bandwidth.

An embodiment of the present invention further provides an information transmission method. The method includes: different transmission nodes multiplexing transmission units on a predetermined spectrum to perform transmission. The different transmission nodes multiplex the predetermined spectrum in a time division mode or multiplex the predetermined spectrum in a frequency division mode.

In an embodiment, the different transmission nodes multiplexing transmission units on a predetermined spectrum to perform transmission includes: puncturing or blanking at least one of a specific time domain resource and a specific frequency domain resource in the transmission unit of the transmission node which has occupied a channel, for the multiplexed transmission node to perform the CCA detection; reserving or blanking an interval between a previous transmission unit and a current transmission unit, for the multiplexed transmission node to perform the CCA detection; or transmitting a specific indication signal in the transmission unit, for the multiplexed transmission node to perform detection or identification.

In an embodiment, the specific indication signal comprises one of: a demodulation reference signal (DMRS), a sounding reference signal (SRS), a cell-specific reference signal (CRS), a discovery reference signal (DRS), a primary synchronization signal (PSS), a secondary synchronization signal (SSS), a preamble and a predefined signal.

An embodiment of the present invention further provides an information transmission method. The method includes: transmitting predetermined information on a predetermined spectrum according to a preset number of repeated transmissions.

In an embodiment, the number of the repeated transmissions on the predetermined spectrum is M1.

In an embodiment, the number of the repeated transmissions or the number of successful CCA detections performed on an unlicensed spectrum is M2; or the number of the CCA detections on the unlicensed spectrum is M2 no matter whether the CCA detection is successful on the unlicensed spectrum; where M2 is not greater than M1.

In an embodiment, the number of the repeated transmissions on the unlicensed spectrum is M1, and the number of the repeated transmissions on the licensed spectrum is M3, where M1 is greater than M3.

In an embodiment, the actual number of the repeated transmissions on the unlicensed spectrum depends on the number of successful listen-before-talks (LBTs).

In an embodiment, the number of the repeated transmissions on the predetermined spectrum is determined by one of the following ways: pre-defining, indicating through a physical layer control channel information (DCI) signaling, indicating through a higher layer radio resource control (RRC) signaling, and determining according to a statistical value within a period of time.

In an embodiment, the statistical value within a period of time includes one of: the number of failed LBTs within a period of time, the number of successful LBTs within a period of time, the number of successful repeated transmissions within a period of time, and the number of failed repeated transmissions within a period of time.

In an embodiment, in a process of the repeated transmission, in response to determining that the transmission is not enabled to be performed due to the failed LBT, the method further includes: indicating the number of failed LBTs in a secondary indication mode; or supplementing the number of the repeated transmissions.

In an embodiment, the secondary indication is transmitted at at least one of: a time after the current LBT fails; a time after all the repeated transmissions are completed; a time after an LBT first successes after the current LBT fails; a time when the number of failed LBTs reaches a predetermined threshold; and a time point at which the secondary indication is transmitted periodically.

In an embodiment, the repeated transmission includes: performing the repeated transmission according to the transmission units; performing the repeated transmission with (Z times M) basic units as a repetition period; or performing circular and repeated transmission based on a redundancy version (RV).

In an embodiment, a starting point of the repeated transmission or a starting point of the transmission of the predetermined information includes: a fixed starting point position or a dynamic starting point position.

In an embodiment, the fixed starting point position includes that: between an ending of the previous transmission and a starting of the current transmission is consecutive in the time domain; or between the ending of the previous transmission and the starting of the current transmission has an offset in the time domain.

In an embodiment, the fixed starting point position or the offset is notified by a physical layer control channel information (DCI) signaling, is notified by a higher layer RRC signaling, is predefined, or is pre-determined by a base station and a user equipment (UE) in advance.

In an embodiment, the dynamic starting point position includes: determining the starting point of the transmission according to an LBT successful time in a time window; randomly selecting one of a plurality of predefined transmission starting points as the starting point of the transmission in the time window; fixing one of the plurality of predefined transmission starting points as the starting point of the transmission in the time window; or determining the starting point of the transmission according to the LBT successful time.

In an embodiment, the time window is located in a transmission unit, the time window is located before a repeated transmission unit, the time window is located after a repeated transmission unit, or the time window contains a repeated transmission unit.

In an embodiment, a position of the time window is determined by one of following ways: notifying through a physical layer control channel information (DCI) signaling, notifying through a higher layer RRC signaling, predefining, and pre-determining by a base station and a UE in advance.

An embodiment of the present invention further provides a transmission node. The transmission node includes: a segmentation unit 401, which is configured to perform information segmentation on predetermined information to form information segments; and a communication unit 402, which is configured to use a predetermined spectrum to transmit the information segments.

An embodiment of the present invention further provides a transmission node. The transmission node includes: a first determination unit 501, which is configured to determine a regulatory duration of an unlicensed spectrum; and a second determination unit 502, which is configured to, according to the regulatory duration, determine a size of a transport block for performing data transmission by using the unlicensed spectrum.

An embodiment of the present invention further provides a transmission node. The transmission node includes: a communication unit, which is configured to, in response to determining that a successful time of a clear channel assessment (CCA) detection is earlier than a starting time of a transmission unit, transmit an occupancy signal or a reservation signal in a blank resource between the successful time of the CCA detection and the starting time of the transmission unit.

An embodiment of the present invention further provides a transmission system. The system includes a plurality of transmission nodes. Transmission units on a predetermined spectrum are multiplexed by different transmission nodes to perform transmission. The predetermined spectrum is multiplexed by different transmission nodes in a time division multiplexing mode; or the predetermined spectrum is multiplexed by different transmission nodes in a frequency division multiplexing mode.

An embodiment of the present invention further provides a transmission node. The transmission node is configured to transmit predetermined information on a predetermined spectrum according to a number of repeated transmissions.

The information transmission method, the transmission node and the transmission system provided in the embodiments of the present invention, to some degree, solve the problem that one transmission duration cannot meet a regulatory requirement for a maximum transmission duration in an unlicensed carrier in some scenarios, and the problem that a coverage capability on the unlicensed carrier is insufficient due to a higher probability of LBT failure if a channel condition is poor.

Other aspects can be understood after the drawings and detailed description are read and understood.

### BRIEF DESCRIPTION OF DRAWINGS

FIG. 1 is a flowchart of an information transmission method according to an embodiment 1 of the present invention;
FIG. 2 is a flowchart of an information transmission method according to an embodiment 2 of the present invention;
FIG. 3 is a flowchart of an information transmission method according to an embodiment 3 of the present invention;
FIG. 4 is a structural diagram of a transmission node according to an embodiment 6 of the present invention;
FIG. 5 is a structural diagram of a transmission node according to an embodiment 7 of the present invention;
FIG. 6 is a structural diagram of a transmission node according to an embodiment 8 of the present invention;
FIG. 7 is a structural diagram of a transmission node according to an embodiment 10 of the present invention;
FIG. 8 is a structure diagram of a segmentation transmission performed on a specific carrier on a specific spectrum according to an application embodiment 1 of the present invention;
FIG. 9 is a structure diagram of a segmentation transmission performed on multi-carrier or multi-subcarrier on a specific spectrum according to an application embodiment 1 of the present invention;
FIG. 10a is a schematic diagram of a blank resource position or a punctured resource position which is located at the end of a transmission unit according to an application embodiment 3 of the present invention;
FIG. 10b is a schematic diagram of a blank resource position or a punctured resource position which is located at the start of a transmission unit according to an application embodiment 3 of the present invention;
FIG. 10c is a schematic diagram of a blank resource position or a punctured resource position which is located at a specific position in a transmission unit according to an application embodiment 3 of the present invention;
FIG. 11 is a schematic diagram of a transmission interval reserved or blanked between the ending of a previous transmission unit and the starting of a current transmission unit according to an application embodiment 3 of the present invention;
FIG. 12 is a schematic diagram of information for indicating that the number of transmitting LBT unsuccessfully is supplemented according to an application embodiment 5 of the present invention; and
FIG. 13 is a schematic diagram of a repeated transmission mode according to an application embodiment 6 of the present invention.

### DETAILED DESCRIPTION

Solutions of the present invention will be further described in detail with reference to the drawings and embodiments.

### Embodiment 1

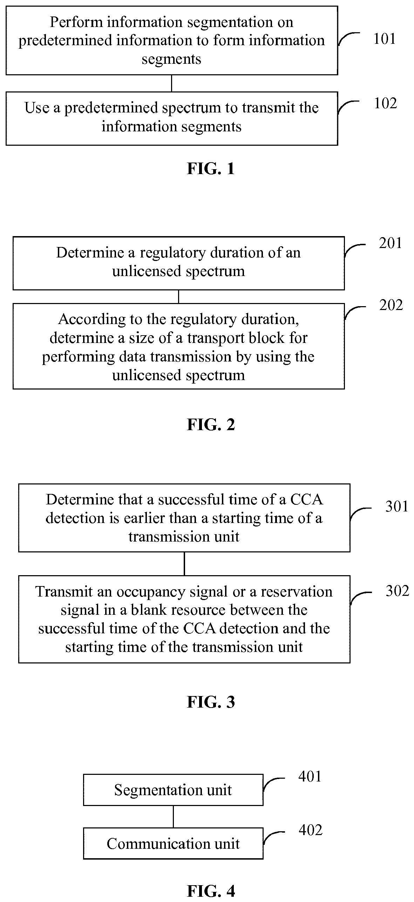

FIG. 1 is a flowchart of an information transmission method according to an embodiment 1 of the present invention. As shown in FIG. 1, the information transmission method includes the steps described below.

In step 101, information segmentation is performed on predetermined information to form information segments.

In step 102, the information segments are transmitted by using a predetermined spectrum.

In an embodiment, the predetermined spectrum includes one of an unlicensed spectrum, a shared spectrum and a licensed spectrum.

In an embodiment, the transmitting the information segments by using a predetermined spectrum includes: performing a clear channel assessment (CCA) detection on the predetermined spectrum and acquiring N transmission units for transmitting the information segments; and transmitting the information segments respectively by using the N transmission units.

In an embodiment, the performing a CCA detection on the predetermined spectrum and acquiring N transmission units for transmitting the information segments includes: performing the CCA detection on the predetermined spectrum and acquiring the N transmission units for transmitting the information segments on one carrier or on a subcarrier.

In an embodiment, the performing the CCA detection on the predetermined spectrum and acquiring N transmission units for transmitting the information segments on one carrier or on one subcarrier includes: after transmitting by using m transmission units is completed, performing the CCA detection on the predetermined spectrum and acquiring transmission units for transmitting the information segments on the same carrier or on the same subcarrier, where m is a positive integer which is not greater than N. That is, after the m transmission units are transmitted, the CCA detection is performed to check the current channel state. If the channel state satisfies a condition, the information may continue to be transmitted. That is, the channel is checked to satisfy the condition one time then only a specific number of units may be transmitted.

In an embodiment, the method further includes: in response to not acquiring the transmission units for transmitting the information segments, continuously performing the CCA detection on the predetermined spectrum, or abandoning the current transmission or the transmission of the information segments.

In an embodiment, the performing a CCA detection on the predetermined spectrum and acquiring N transmission units for transmitting the information segments includes: performing the CCA detection on the predetermined spectrum and acquiring the N transmission units for transmitting the information segments on multi-carrier or on multi-subcarrier.

In an embodiment, the performing the CCA detection on the predetermined spectrum and acquiring the N transmission units on multi-carrier or on multi-subcarrier incudes: before transmitting the information segments, performing the CCA detection on the multi-carrier or on the multi-subcarrier and acquiring at least one of the multi-carrier and multi-subcarrier as the transmission units for transmitting the information segments.

In an embodiment, the performing a CCA detection on the predetermined spectrum and acquiring N transmission units for transmitting the information segments includes: performing the CCA detection on the predetermined spectrum and acquiring the N transmission units in a specific frequency domain resource.

In an embodiment, the performing the CCA detection on the predetermined spectrum and acquiring the N transmission units in a specific frequency domain resource includes: transmitting the information segments using the N transmission units on one of a resource block (RB), a resource block group (RBG), a sub-band, and one or more subcarriers in a specific bandwidth; transmitting the information segments using the N transmission units on one of multiple RBs, multiple RBGs, multiple sub-bands, and multiple specific bandwidths in which one or more subcarriers per specific bandwidth; transmitting the information segments using the N transmission units on one of an RB, an RBG, a sub-band, and a specific bandwidth; or transmitting the information segments using the N transmission units on one of multiple RBs, multiple RBGs, multiple sub-bands, and multiple specific bandwidths.

In an embodiment, the method further includes: in response to determining that a successful time of the CCA detection is earlier than a starting time of the transmission unit, transmitting an occupancy signal or a reservation signal in a blank resource between the successful time of the CCA detection and the starting time of the transmission unit.

In an embodiment, the method further includes: in response to determining that the successful time of the CCA detection is later than the starting time of the transmission unit, abandoning the current data transmission or transmitting the occupancy signal or the reservation signal in a blank resource between the successful time of the CCA detection and a starting time of a next transmission unit.

In an embodiment, the occupancy signal or the reservation signal is transmitted by a base station through an indication of a physical layer downlink control information (DCI) signaling. The physical layer DCI signaling includes one of: DCI format 0, DCI format 0A, DCI format 0B, DCI format 1, DCI format 1A, DCI format 1B, DCI format 1C, DCI format 1D, DCI format 2, DCI format 2A, DCI format 2B, DCI format 2C, DCI format 2D, DCI format 3, DCI format 3A, DCI format 4, DCI format 4A and DCI format 4B.

In an embodiment, a frequency domain position at which the occupancy signal or the reservation signal is transmitted includes one of: a specific frequency domain resource in an entire transmission bandwidth, a frequency domain resource corresponding to a scheduling resource in the entire transmission bandwidth, and a frequency domain recourse corresponding to the entire transmission bandwidth.

In an embodiment, the method further includes: different transmission nodes multiplexing the transmission units on the predetermined spectrum to perform the transmission. The multiplexing includes: the different transmission nodes multiplexing the transmission units on the predetermined spectrum in a time division multiplexing mode or multiplexing the transmission units on the predetermined spectrum in a frequency division multiplexing mode.

In an embodiment, the different transmission nodes multiplexing the transmission units on the predetermined spectrum to perform the transmission includes: puncturing or blanking at least one of a specific time domain resource and a specific frequency domain resource in the transmission unit of the transmission node which has occupied a channel, for the multiplexed transmission node to perform the CCA detection; reserving or blanking an interval between a previous transmission unit and a current transmission unit, for the multiplexed transmission node to perform the CCA detection; or transmitting a specific indication signal in the transmission unit, for the multiplexed transmission node to perform detection or identification.

In an embodiment, the specific indication signal includes at least one of: a demodulation reference signal (DMRS), a sounding reference signal (SRS), a cell-specific reference signal (CRS), a discovery reference signal (DRS), a primary synchronization signal (PSS), a secondary synchronization signal (SSS), a preamble and a predefined signal.

In an embodiment, the number of repeated transmissions on the predetermined spectrum is M1.

In an embodiment, the number of the repeated transmissions or the number of successful CCA detections performed on the unlicensed spectrum is M2; or the number of the CCA detections performed on the unlicensed spectrum is M2 no matter whether the CCA detection is successful on the unlicensed spectrum; where M2 is not greater than M1.

In an embodiment, the number of the repeated transmissions on the unlicensed spectrum is M1, and the number of the repeated transmissions on the licensed spectrum is M3, where M1 is greater than M3.

In an embodiment, the actual number of the repeated transmissions on the unlicensed spectrum depends on the number of successful listen-before-talks (LBTs).

In an embodiment, the number of the repeated transmissions on the predetermined spectrum is determined by one of the following ways: pre-defining, indicating through a physical layer control channel information (DCI) signaling, indicating through a higher layer radio resource control (RRC) signaling, and determining according to a statistical value within a period of time.

In an embodiment, the statistical value within a period of time includes one of: the number of failed LBTs within a period of time, the number of successful LBTs within a period of time, the number of successful repeated transmissions within a period of time, and the number of failed repeated transmissions within a period of time.

In an embodiment, in a process of the repeated transmission, in response to determining that the transmission is not enabled to be performed due to the failed LBT, the method further includes: indicating the number of failed LBTs in a secondary indication mode; or supplementing the number of the repeated transmissions.

In an embodiment, the secondary indication is transmitted at at least one of: a time after the current LBT fails; a time after all the repeated transmissions are completed; a time after an LBT first successes after the current LBT fails; a time when the number of failed LBTs reaches a predetermined threshold; and a time point at which the secondary indication is transmitted periodically.

In an embodiment, a starting point of a transmission of an information segment or a starting point of a repeated transmission of an information segment includes: a fixed starting point position or a dynamic starting point position.

In an embodiment, the fixed starting point position includes that: between an ending of a previous transmission and a starting of a current transmission is consecutive in a time domain; or between the ending of the previous transmission and the starting of the current transmission has an offset in the time domain.

In an embodiment, the fixed starting point position or the offset is notified by a physical layer control channel information (DCI) signaling, is notified by a higher layer RRC signaling, is predefined, or is pre-determined by a base station and a user equipment (UE) in advance.

In an embodiment, the dynamic starting point position includes: determining the starting point of the transmission according to a successful time of performing LBT in a time window; randomly selecting one of a plurality of predefined transmission starting points as the starting point of the transmission in the time window; fixing one of the plurality of predefined transmission starting points as the starting point of the transmission in the time window; or determining the starting point of the transmission according to the successful time of LBT.

In an embodiment, the time window is located in a transmission unit, the time window is located before a repeated transmission unit, the time window is located after a repeated transmission unit, or the time window contains a repeated transmission unit.

In an embodiment, a position of the time window is determined by one of following ways: notifying through a physical layer control channel information (DCI) signaling, notifying through a higher layer RRC signaling, predefining, and pre-determining by a base station and a UE in advance.

In an embodiment, the repeated transmission includes: performing the repeated transmission according to the transmission units; performing the repeated transmission with (Z times M) basic units as a repetition period; or performing circular and repeated transmission based on a redundancy version (RV).

### Embodiment 2

FIG. 2 is a flowchart of an information transmission method according to an embodiment 2 of the present invention. As shown in FIG. 2, the information transmission method includes the steps described below.

In step 201, a regulatory duration of an unlicensed spectrum is determined.

In step 202, according to the regulatory duration, a size of a transport block for performing transmission by using the unlicensed spectrum is determined.

### Embodiment 3

The embodiment of the present invention further provides an information transmission method. As shown in FIG. 3, the method includes steps described below.

In step 301, it is determined that a successful time of a CCA detection is earlier than a starting time of a transmission unit

In step 302, an occupancy signal or a reservation signal is transmitted in a blank resource between the successful time of the CCA detection and the starting time of the transmission unit.

In an embodiment, the method further includes: in response to determining that the successful time of the CCA detection is later than the starting time of the transmission unit, abandoning a current data transmission or transmitting the occupancy signal or the reservation signal in the blank resource between the successful time of the CCA detection and a starting time of a next transmission unit.

In an embodiment, the occupancy signal or the reservation signal is transmitted by a base station through an indication of a physical layer downlink control information (DCI) signaling. The physical layer DCI signaling includes one of: DCI format 0, DCI format 0A, DCI format 0B, DCI format 1, DCI format 1A, DCI format 1B, DCI format 1C, DCI format 1D, DCI format 2, DCI format 2A, DCI format 2B, DCI format 2C, DCI format 2D, DCI format 3, DCI format 3A, DCI format 4, DCI format 4A and DCI format 4B.

In an embodiment, a frequency domain position at which the occupancy signal or the reservation signal is transmitted includes one of: a specific frequency domain resource in an entire transmission bandwidth, a frequency domain resource corresponding to a scheduling resource in the entire transmission bandwidth, and a frequency domain recourse corresponding to the entire transmission bandwidth.

### Embodiment 4

The embodiment of the present invention further provides an information transmission method. The method includes steps described below.

Different transmission nodes multiplex transmission units on a predetermined spectrum to perform transmission. The different transmission nodes multiplex the predetermined spectrum in a time division mode or multiplex the predetermined spectrum in a frequency division mode.

In an embodiment, the different transmission nodes multiplexing transmission units on a predetermined spectrum to perform transmission includes: puncturing or blanking at least one of a specific time domain resource and a specific frequency domain resource in the transmission unit of the transmission node which has occupied a channel, for the multiplexed transmission node to perform the CCA detection; reserving or blanking an interval between a previous transmission unit and a current transmission unit, for the multiplexed transmission node to perform the CCA detection; or transmitting a specific indication signal in the transmission unit, for the multiplexed transmission node to perform detection or identification.

In an embodiment, the specific indication signal comprises one of: a demodulation reference signal (DMRS), a sounding reference signal (SRS), a cell-specific reference signal (CRS), a discovery reference signal (DRS), a primary synchronization signal (PSS), a secondary synchronization signal (SSS), a preamble and a predefined signal.

### Embodiment 5

The embodiment of the present invention further provides an information transmission method. The method includes a step described below.

Predetermined information is transmitted on a predetermined spectrum according to the preset number of repeated transmissions.

In an embodiment, the number of the repeated transmissions on the predetermined spectrum is M1.

In an embodiment, the number of the repeated transmissions or the number of successful CCA detections performed on an unlicensed spectrum is M2; or the number of the CCA detections on the unlicensed spectrum is M2 no matter whether the CCA detection is successful on the unlicensed spectrum; where M2 is not greater than M1.

In an embodiment, the number of the repeated transmissions on the unlicensed spectrum is M1, and the number of the repeated transmissions on the licensed spectrum is M3, where M1 is greater than M3.

In an embodiment, the actual number of the repeated transmissions on the unlicensed spectrum depends on the number of successful listen-before-talks (LBTs).

In an embodiment, the number of the repeated transmissions on the predetermined spectrum is determined by one of the following ways: pre-defining, indicating through a physical layer control channel information (DCI) signaling, indicating through a higher layer radio resource control (RRC) signaling, and determining according to a statistical value within a period of time.

In an embodiment, the statistical value within a period of time includes one of: the number of failed LBTs within a period of time, the number of successful LBTs within a period of time, the number of successful repeated transmissions within a period of time, and the number of failed repeated transmissions within a period of time.

In an embodiment, in a process of the repeated transmission, in response to determining that the transmission is not enabled to be performed due to the failed LBT, the method further includes: indicating the number of failed LBTs in a secondary indication mode; or supplementing the number of the repeated transmissions.

In an embodiment, the secondary indication is transmitted at at least one of: a time after the current LBT fails; a time after all the repeated transmissions are completed; a time after an LBT first successes after the current LBT fails; a time when the number of failed LBTs reaches a predetermined threshold; and a time point at which the secondary indication is transmitted periodically.

In an embodiment, the repeated transmission includes: performing the repeated transmission according to the transmission units; performing the repeated transmission with (Z times M) basic units as a repetition period; or performing circular and repeated transmission based on a redundancy version (RV).

In an embodiment, a starting point of the repeated transmission or a starting point of the transmission of the predetermined information includes: a fixed starting point position or a dynamic starting point position.

In an embodiment, the fixed starting point position includes that: between an ending of the previous transmission and a starting of the current transmission is consecutive in the time domain; or between the ending of the previous transmission and the starting of the current transmission has an offset in the time domain.

In an embodiment, the fixed starting point position or the offset is notified by a physical layer control channel information (DCI) signaling, is notified by a higher layer RRC signaling, is predefined, or is pre-determined by a base station and a user equipment (UE) in advance.

In an embodiment, the dynamic starting point position includes: determining the starting point of the transmission according to an LBT successful time in a time window; randomly selecting one of a plurality of predefined transmission starting points as the starting point of the transmission in the time window; fixing one of the plurality of predefined transmission starting points as the starting point of the transmission in the time window; or determining the starting point of the transmission according to the LBT successful time.

In an embodiment, the time window is located in a transmission unit, the time window is located before a repeated transmission unit, the time window is located after a repeated transmission unit, or the time window contains a repeated transmission unit.

In an embodiment, a position of the time window is determined by one of following ways: notifying through a physical layer control channel information (DCI) signaling, notifying through a higher layer RRC signaling, predefining, and pre-determining by a base station and a UE in advance.

### Embodiment 6

FIG. 4 is a structural diagram of a transmission node according to an embodiment of the present invention. As shown in FIG. 4, the transmission node includes a segmentation unit 401 and a communication unit 402.

The segmentation unit 401 is configured to perform information segmentation on predetermined information to form information segments.

The communication unit 402 is configured to use a predetermined spectrum to transmit the information segments.

In an embodiment, the predetermined spectrum includes one of an unlicensed spectrum, a shared spectrum and a licensed spectrum.

In an embodiment, the communication unit 402 is configured to perform a CC) detection on the predetermined spectrum and acquire N transmission units for transmitting the information segments; and transmit the information segments respectively using the N transmission units.

In an embodiment, the communication unit 402 is configured to perform the CCA detection on the predetermined spectrum and acquire the N transmission units for transmitting the information segments on one carrier or on a subcarrier.

In an embodiment, the communication unit 402 performing the CCA detection on the predetermined spectrum and acquiring N transmission units for transmitting the information segments on one carrier or on one subcarrier includes: after transmitting by using m transmission units is completed, performing the CCA detection on the predetermined spectrum and acquiring transmission units for transmitting the information segments on the same carrier or on the same subcarrier, where m is a positive integer which is not greater than N.

In an embodiment, the communication unit 402 is configured to, in response to not acquiring the transmission units for transmitting the information segments, continuously perform the CCA detection on the predetermined spectrum, or abandon the current transmission or the transmission of the information segments.

In an embodiment, the communication unit 402 performing a CCA detection on the predetermined spectrum and acquiring N transmission units for transmitting the information segments includes: performing the CCA detection on the predetermined spectrum and acquiring the N transmission units for transmitting the information segments on multi-carrier or on multi-subcarrier.

In an embodiment, the communication unit 402 performing the CCA detection on the predetermined spectrum and acquiring the N transmission units on multi-carrier or on multi-subcarrier incudes: before transmitting the information segments, performing the CCA detection on the multi-carrier or on the multi-subcarrier and acquiring at least one of the multi-carriers and multi-subcarriers as the transmission units.

In an embodiment, the communication unit 402 performing a CCA detection on the predetermined spectrum and acquiring N transmission units for transmitting the information segments includes: performing the CCA detection on the predetermined spectrum and acquiring the N transmission units in a specific frequency domain resource.

In an embodiment, the communication unit 402 is configured to: transmitting the information segments on one of a resource block (RB), a resource block group (RBG), a sub-band, and one or more subcarriers in a specific bandwidth; transmitting the information segments on one of multiple RBs, multiple RBGs, multiple sub-bands, and multiple specific bandwidths in which one or more subcarriers per specific bandwidth; transmitting the information segments on one of an RB, an RBG, a sub-band, and a specific bandwidth; or transmitting the information segments on one of multiple RBs, multiple RBGs, multiple sub-bands, and multiple specific bandwidths.

In an embodiment, the communication unit 402 is further configured to: in response to determining that a successful time of the CCA detection is earlier than a starting time of the transmission unit, transmitting an occupancy signal or a reservation signal in a blank resource between the successful time of the CCA detection and the starting time of the transmission unit.

In an embodiment, the communication unit 402 is further configured to: in response to determining that the successful time of the CCA detection is later than the starting time of the transmission unit, abandoning the current data transmission or transmitting the occupancy signal or the reservation signal in a blank resource between the successful time of the CCA detection and a starting time of a next transmission unit.

In an embodiment, the occupancy signal or the reservation signal is transmitted by a base station through an indication of a physical layer downlink control information (DCI) signaling. The physical layer DCI signaling includes one of: DCI format 0, DCI format 0A, DCI format 0B, DCI format 1, DCI format 1A, DCI format 1B, DCI format 1C, DCI format 1D, DCI format 2, DCI format 2A, DCI format 2B, DCI format 2C, DCI format 2D, DCI format 3, DCI format 3A, DCI format 4, DCI format 4A and DCI format 4B.

In an embodiment, a frequency domain position at which the occupancy signal or the reservation signal is transmitted includes one of: a specific frequency domain resource in an entire transmission bandwidth, a frequency domain resource corresponding to a scheduling resource in the entire transmission bandwidth, and a frequency domain recourse corresponding to the entire transmission bandwidth.

In an embodiment, different transmission nodes multiplex the transmission units on the predetermined spectrum to perform the transmission. That is, the communication unit 402 is further configured to multiplex the transmission units on the predetermined spectrum of other transmission nodes to perform transmission, which includes: multiplexing the predetermined spectrum in a time division mode or multiplexing the predetermined spectrum in a frequency division mode.

In an embodiment, the communication unit 402 multiplexing the transmission units on the predetermined spectrum of other transmission nodes to perform the transmission includes: puncturing or blanking at least one of a specific time domain resource and a specific frequency domain resource in the transmission unit of the transmission node which has occupied a channel, for performing the CCA detection (at this time, a node at which the communication unit 402 is located is the multiplexed transmission node); or reserving or blanking an interval between a previous transmission unit and a current transmission unit, for the multiplexed transmission node to perform the CCA detection (at this time, a node at which the communication unit 402 is located is the transmission node which has occupied a channel); or transmitting a specific indication signal in the transmission unit, for the multiplexed transmission node to perform detection or identification (at this time, a node at which the communication unit 402 is located is the transmission node which has occupied a channel; if the current node is the multiplexed transmission node, then the communication unit 402 detects or identifies the specific indication signal transmitted in the transmission unit and performs multiplexing according to the indication signal).

In an embodiment, the specific indication signal includes at least one of: DMRS, SRS, CRS, DRS, PSS, SSS, a preamble and a predefined signal.

In the embodiment, a transmission interval is set between two transmission units of the same frequency resource in the predetermined spectrum. The transmission interval between the n^{th} transmission unit and the (n+1)^{th} transmission unit is configured to perform a CCA on the (n+1)^{th} transmission unit, to improve occupancy rate of the (n+1)^{th} transmission unit.

In the embodiment, the communication unit 402 is further configured to, in response to transmitting the predetermined information by using the transmission unit, transmit an occupancy signal for indicating that the corresponding transmission unit has been occupied.

In an embodiment, the number of repeated transmissions on the predetermined spectrum is M1.

In an embodiment, the number of the repeated transmissions and the number of successful CCA detections performed on the unlicensed spectrum are both M2; or the number of the CCA detections performed on the unlicensed spectrum is M2 no matter whether the CCA detection is successful on the unlicensed spectrum; where M2 is not greater than M1.

In an embodiment, the number of the repeated transmissions on the unlicensed spectrum is M1, and the number of the repeated transmissions on the licensed spectrum is M3, where M1 is greater than M3.

In an embodiment, the actual number of the repeated transmissions on the unlicensed spectrum depends on the number of successful LBTs.

In an embodiment, the number of the repeated transmissions on the predetermined spectrum is determined by one of the following ways: pre-defining, indicating through a physical layer control channel information (DCI) signaling, indicating through a higher layer radio resource control (RRC) signaling, and determining according to a statistical value within a period of time.

In an embodiment, the statistical value within a period of time includes one of: the number of failed LBTs within a period of time, the number of successful LBTs within a period of time, the number of successful repeated transmissions within a period of time, and the number of failed repeated transmissions within a period of time.

In an embodiment, in a process of the repeated transmission, in response to determining that the transmission is not enabled to be performed due to the failed LBT, the communication unit 402 is further configured to indicate the number of failed LBTs in a secondary indication mode; or supplement the number of the repeated transmissions.

In an embodiment, the secondary indication is transmitted at at least one of: a time after the current LBT fails; a time after all the repeated transmissions are completed; a time after an LBT first successes after the current LBT fails; a time when the number of failed LBTs reaches a predetermined threshold; and a time point at which the secondary indication is transmitted periodically.

In an embodiment, a starting point of a transmission of an information segment or a starting point of a repeated transmission of an information segment includes: a fixed starting point position or a dynamic starting point position.

In an embodiment, the fixed starting point position includes that: between an ending of a previous transmission and a starting of a current transmission is consecutive in a time domain; or between the ending of the previous transmission and the starting of the current transmission has an offset in the time domain.

In an embodiment, the fixed starting point position or the offset is notified by a physical layer control channel information (DCI) signaling, is notified by a higher layer RRC signaling, is predefined, or is pre-determined by a base station and a UE in advance.

In an embodiment, the dynamic starting point position includes: determining the starting point of the transmission according to a successful time of performing LBT in a time window; randomly selecting one of a plurality of predefined transmission starting points as the starting point of the transmission in the time window; fixing one of the plurality of predefined transmission starting points as the starting point of the transmission in the time window; or determining the starting point of the transmission according to the successful time of LBT.

In an embodiment, the time window is located in a transmission unit, the time window is located before a repeated transmission unit, the time window is located after a repeated transmission unit, or the time window contains a repeated transmission unit.

In an embodiment, a position of the time window is determined by one of following ways: notifying through a physical layer control channel information (DCI) signaling, notifying through a higher layer RRC signaling, predefining, and pre-determining by a base station and a UE in advance.

In an embodiment, the repeated transmission includes: performing the repeated transmission according to the transmission units; performing the repeated transmission with (Z times M) basic units as a repetition period; or performing circular and repeated transmission based on a RV.

### Embodiment 7

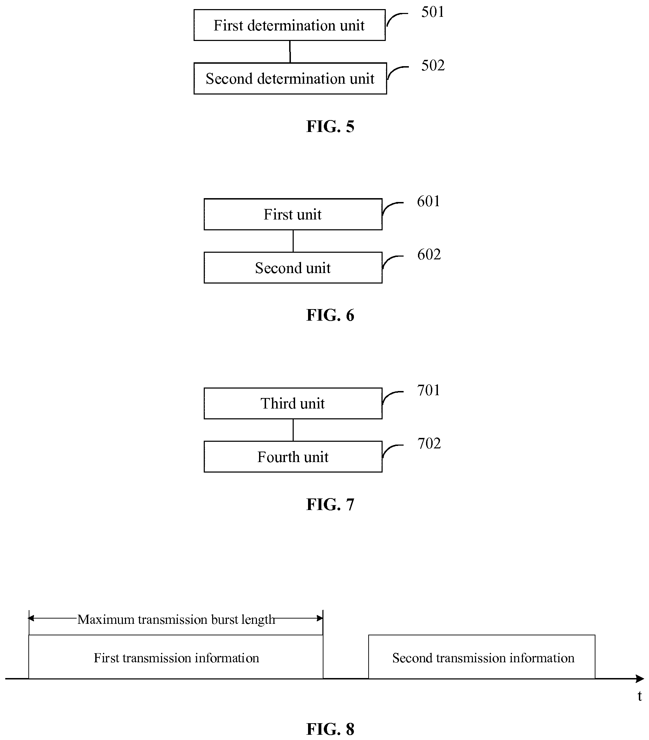

FIG. 5 is a structural diagram of a transmission node according to an embodiment of the present invention. As shown in FIG. 5, the transmission node includes a first determination unit 501 and a second determination unit 502.

The first determination unit 501 is configured to determine a regulatory duration of an unlicensed spectrum.

The second determination unit 502 is configured to, according to the regulatory duration, determine a size of a transport block for performing data transmission by using the unlicensed spectrum.

### Embodiment 8

An embodiment of the present invention further provides a transmission node. The transmission node includes a communication unit 402. The communication unit 402 is configured to, in response to determining that a successful time of CCA detection is earlier than a starting time of a transmission unit, transmit an occupancy signal or a reservation signal in a blank resource between the successful time of the CCA detection and the starting time of the transmission unit.

The communication unit 402 may include a first unit 601 and a second unit 602. As shown in FIG. 6, the first unit 601 is configured to determine whether the successful time of the CCA detection is earlier than the starting time of the transmission unit, and the second unit 602 is configured to, in response to determining by the first unit 601 that the successful time of the CCA detection is earlier than the starting time of the transmission unit, transmit the occupancy signal or the reservation signal in the blank resource between the successful time of the CCA detection and the starting time of the transmission unit.

In the embodiment, the communication unit 402 is further configured to, in response to determining that the successful time of the CCA detection is later than the starting time of the transmission unit, abandon the current data transmission, or transmit the occupancy signal or the reservation signal in a blank resource between the successful time of the CCA detection and a starting time of a next transmission unit.

The first unit 601 is further configured to determine whether the successful time of the CCA detection is later than the starting time of the transmission unit.

The second unit 602 is further configured to, in response to determining by the first unit 601 that the successful time of the CCA detection is later than the starting time of the transmission unit, abandon the current data transmission, or transmit the occupancy signal or the reservation signal in the blank resource between the successful time of the CCA detection and the starting time of the next transmission unit.

In the embodiment, the occupancy signal or the reservation signal is indicated by a base station through an indication of a physical layer DCI signaling.

The physical layer DCI signaling includes one of: DCI format 0, DCI format 0A, DCI format 0B, DCI format 1, DCI format 1A, DCI format 1B, DCI format 1C, DCI format 1D, DCI format 2, DCI format 2A, DCI format 2B, DCI format 2C, DCI format 2D, DCI format 3, DCI format 3A, DCI format 4, DCI format 4A and DCI format 4B.

In the embodiment, a frequency domain position at which the occupancy signal or the reservation signal is transmitted includes one of: a specific frequency domain resource in an entire transmission bandwidth, a frequency domain resource corresponding to a scheduling resource in the entire transmission bandwidth, and a frequency domain recourse corresponding to the entire transmission bandwidth.

### Embodiment 9

The embodiment of the present invention provides a transmission system. The transmission system includes that: different transmission nodes multiplex transmission units on a predetermined spectrum to perform transmission.

The predetermined spectrum is multiplexed between the different transmission nodes in a time division mode; or the predetermined spectrum is multiplexed between the different transmission nodes in a frequency division mode.

The transmission system includes a plurality of transmission nodes, such as a first transmission node and a second transmission node. The first transmission node is configured to use a predetermined spectrum to transmit information segments. The second transmission node is configured to multiplex transmission units on the predetermined spectrum to perform transmission.

The step of multiplexing the transmission units on the predetermined spectrum to perform the transmission includes: multiplexing the predetermined spectrum in a time division mode or multiplexing the predetermined spectrum in a frequency division mode.

In the embodiment, the step of multiplexing the transmission units on the predetermined spectrum to perform the transmission includes one of steps described below:
the second transmission node is further configured to puncture or blank a specific time domain and/or frequency domain resource in the transmission unit of the first transmission node which has occupied a channel, for the second transmission node to perform the CCA detection;
the first transmission node is further configured to reserve or blank an interval between a previous transmission unit and a current transmission unit, for the multiplexed transmission node (for example the second transmission node) to perform the CCA detection; and
the first transmission node is further configured to transmit a specific indication signal in the transmission unit, for the multiplexed transmission node (for example the second transmission node) to perform detection or identification.

In the embodiment, the specific indication signal includes one of: a DMRS, an SRS, a CRS, a DRS, a PSS, an SSS, a preamble and a predefined signal.

### Embodiment 10

An embodiment of the present invention further provides a structure of a transmission node. The transmission node is configured to transmit predetermined information on a predetermined spectrum according to the preset number of repeated transmissions. The transmission node includes a third unit 701 and a fourth unit 702.

As shown in FIG. 7, the third unit 701 is configured to acquire the preset number of repeated transmissions, and the fourth unit 702 is configured to transmit predetermined information on a predetermined spectrum according to the preset number of the repeated transmissions.

In the embodiment, the preset number of the repeated transmission on the predetermined spectrum is M1.

In the embodiment, the number of the repeated transmissions or the number of successful CCA detections performed on an unlicensed spectrum is M2; or the number of the CCA detections performed on the unlicensed spectrum is M2 no matter whether the CCA detection is performed successfully on the unlicensed spectrum; where M2 is not greater than M1.

In the embodiment, the number of the repeated transmissions on the unlicensed spectrum is M1 which is greater than the number, M3, of the repeated transmissions on the licensed spectrum.

In the embodiment, the actual number of the repeated transmissions on the unlicensed spectrum depends on the number of successful LBTs.

In the embodiment, the number of the repeated transmission on the predetermined spectrum is determined by one of following ways: pre-defining, indicating through a physical layer control channel information (DCI) signaling, indicating through a higher layer radio resource control (RRC) signaling, or being determined according to a statistical value within a period of time.

The statistical value within a period of time includes one of: the number of failed LBTs within a period of time, the number of successful LBTs within a period of time, the number of successful repeated transmissions within a period of time, or the number of failed repeated transmissions within a period of time.

In the embodiment, the third unit 701 is further configured to, in response to enabling to transmit due to the failed LBT in a process of a repeated transmission, indicate the number of failed LBTs in a secondary indication mode; or supplement the number of the repeated transmissions.

In the embodiment, the secondary indication is transmitted at at least one of: a time after the current LBT fails; a time after all the repeated transmissions are completed; a time after an LBT first successes after the current LBT fails; a time when the number of failed LBTs reaches a predetermined threshold; and a time point at which the secondary indication is transmitted periodically.

In the embodiment, the repeated transmission includes: performing the repeated transmission according to the transmission unit; performing the repeated transmission with (Z times M) basic units as a repetition period; or performing a circular and repeated transmission based on an RV.

In the embodiment, a starting point of the transmission of the information segments for information transmission or the starting point of the repeated transmission of the information segments includes a fixed starting point position or a dynamic starting point location.

In an embodiment, the fixed starting point position includes that: between an ending of a previous transmission and a starting of a current transmission is consecutive in a time domain; or between the ending of the previous transmission and the starting of the current transmission has an offset in the time domain.

In an embodiment, the fixed starting point position or the offset is notified by a physical layer control channel information (DCI) signaling, is notified by a higher layer RRC signaling, is predefined, or is pre-determined by a base station and a UE in advance.

In an embodiment, the dynamic starting point position includes: determining the starting point of the transmission according to a successful time of performing LBT in a time window; randomly selecting one of a plurality of predefined transmission starting points as the starting point of the transmission in the time window; fixing one of the plurality of predefined transmission starting points as the starting point of the transmission in the time window; or determining the starting point of the transmission according to the successful time of LBT.

In an embodiment, the time window is located in a transmission unit, the time window is located before a repeated transmission unit, the time window is located after a repeated transmission unit, or the time window contains a repeated transmission unit.

In an embodiment, a position of the time window is determined by one of following ways: notifying through a physical layer control channel information (DCI) signaling, notifying through a higher layer RRC signaling, predefining, and pre-determining by a base station and a UE in advance.

The information transmission method, the transmission node and the transmission system provided in the embodiments of the present invention will be described in detail below in conjunction with application scenarios.

The method provided in the embodiments of the present invention is applicable to the following scenarios or types of services, including enhanced mobile broadband (eMBB), massive machine type communication (mMTC) such as a narrow band Internet of Things (NB-IoT), and ultra-reliable low-latency communications (URLLC) such as a short transmission time interval (short TTI).

The method provided in the embodiments of the present invention is applicable to one of following spectrums: a licensed spectrum, an unlicensed spectrum, a shared spectrum, and another spectrum available for transmission. For ease of description, the above spectrums are referred to as a predetermined spectrum or a specific spectrum.

The regulatory requirement involved in the embodiments of the present invention includes one or more of: a maximum transmission duration limit for one time of transmission, a minimum transmission duration limit for one time of transmission, a maximum PSD limit, a minimum PSD limit, a maximum EIPR limit and a minimum EIPR limit.

The subcarrier interval involved in the embodiments of the present invention may be calculated via a formula f^{∗}2n. F may be any positive real number. For example, f is 15 or 7.5. N may be a positive integer, a negative integer or zero.

The system bandwidth in the embodiments of the present invention may be one of: 180kHz (equal to one PRB), 2MHz, 5MHz, 10MHz, 15MHz, 20MHz, 25MHz, 30MHz, 40MHz, 60MHz, 80MHz, 450MHz, 500MHz, 700MHz, 750MHz, 800MHz, 900MHz, 1GHz, 2GHz, 5GHz, 10GHz, 60GHz, and 480GHz, etc., but not limited to the above bandwidths. That is, the system bandwidth may be any size of system bandwidth, and only some typical values are listed herein. The basic unit of the transmission may be one of a subcarrier, an RB, an RBG, a sub-band, a subcarrier group, an RB group, an RBG group, a sub-band group, a carrier and a carrier group.

The transmitting node involved in the embodiments of the present invention may be a base station or a terminal UE.

The rule manner of the starting point of the repeated transmission, and/or the manner of the repeated transmission, and/or the related method of the repeated transmission described in the embodiments of the present invention is not only applicable to the transmission of information segments, but also applicable to the transmission of the predetermined information, as well as applicable to related questions or the content related to the transmission.

### Application embodiment 1

In some scenarios or for some types of services, the subcarrier interval of an uplink and/or a downlink is relatively small since the system bandwidth is relatively narrow, such as 1.25kHz, 2.5kHz, 3.75kHz, 5kHz, and 7.5kHz. Therefore, in response to determining that transport blocks are mapped to the time or frequency domain resource for being transmitted, a long time or frequency domain resource is required to perform the transmission of corresponding information (including at least one of the following: data, control information, and a reference signal). In view of this, if the above scenario or the service is applied to a specific spectrum, it will appear that a limit of a regulatory requirement of the specific spectrum is not satisfied.

This embodiment provides a transmission method for solving the problem of the duration of one time of transmission exceeding the regulatory requirement of the specific spectrum. According to a reciprocal relationship between the subcarrier interval and the symbol duration, in response to determining that the subcarrier interval becomes shorter, the symbol duration becomes longer correspondingly, thereby causing the problem of the duration of one time of transmission becoming longer. For ease of description, the embodiment takes the information transmission on the unlicensed spectrum as an example.

Manner 1: The transmission node completes the current transmission on only one unlicensed carrier. That is, the transmission node requires multiple time-frequency domain resources to perform one time of transmission. However, due to a restriction requirement of a regulatory duration on the unlicensed carrier, a duration for occupying a channel to perform one time of transmission cannot exceed a maximum transmission duration regulated. Therefore, the transmission node needs to perform a segmentation transmission on the unlicensed carrier in response to transmitting completely data or information in one time of transmission. The segmentation transmission may be understood as data segmentation transmission, segmenting and using time-frequency domain resources for carrying the data, or mapping the carried user data or information onto the segmented time-frequency domain resources to perform the transmission.

For example, on one unlicensed carrier, when the transmission node detects that a channel is idle by performing the CCA detection, the transmission starts until it meets the corresponding maximum transmission burst duration limit in the regulatory requirement. When the burst duration limit is exceeded, the current transmission is stopped. The remaining data, channel, signal or control signaling is transmitted continuously when the channel is successfully occupied next time. As shown in FIG. 8, the first transmission information and the second transmission information may be at least one of the following: the control information, the data, the channel and the signal. The to-be-transmitted information of the transmission node is composed of the first transmission information and the second transmission information. As shown in FIG. 8, when the transmission node performs the CCA and obtains a use right of the unlicensed carrier through competition before transmitting the first transmission information, the transmission of the first transmission information starts to be performed until it meets the maximum transmission burst duration in the regulation. When the maximum transmission burst duration in the regulation is met, the transmission of the first transmission information is stopped. The transmission node may start to transmit the remaining data or information to be transmitted (i.e., the second transmission information in FIG. 8) before a specific time-frequency domain resource or when the transmission node continues to perform the CCA detection and obtains the use right of the unlicensed carrier through the competition. As shown in FIG. 8 in the embodiment, the information or the data, corresponding to one time of scheduling or one specific transport block, may be transmitted completely through two times of transmission. How many times of segmentation transmission are required to complete the transmission of all of the data or the information depends on at least one of following factors: a size of scheduling TBsize, a modulating manner, a coding manner, a size of a to-be-transmitted data packet, a bandwidth (a transmission bandwidth and/or a system bandwidth), a subcarrier interval, a channel state, an allocated time domain resource, an allocated frequency domain resource, and the like.

In addition, the data, channel, signal or control signaling transmitted through different bursts may be jointly decoded or may be individually decoded for each burst, so as to decode the data, channel, signal or control signaling.

Manner 2: The transmission node performs the transmission in a manner of simultaneous preemption of multiple carriers. That is, the transmission node performs the CCA detection on the multiple carriers simultaneously at a certain time or during a certain period of time. The objective is to improve the efficiency of transmission. When the transmission node performs the first time of CCA detection to compete for the use right of unlicensed carrier, and obtains not less than one carrier, the transmission node may select one carrier from the obtained multiple carriers to perform the transmission. When the transmission on a certain carrier exceeds the duration limit in the regulation, the transmission on the certain carrier is stopped. The next CCA detection operation for competition to access to the multiple carriers is performed.

In addition, the carriers used every time by the transmission node to transmit the information may be different or may be the same. Similarly, since an LBT mechanism is introduced into the unlicensed carrier, each time of the transmission may be inconsecutive, or may be consecutive. The consecutive transmission may be considered to have a small interval between the ending of a pervious transmission and the starting of the current transmission, so that other transmission nodes have no time to detect that the current channel is idle. For example, the interval may be not greater than 4us, 9us or 16us.

If the transmission node obtains the multiple carriers simultaneously through the competition, the carrier selected to perform the transmission may include at least one of the following: a carrier whose channel state is better than that of other carries, a carrier indicated by a base station to a UE, a carrier autonomously selected by the base station, a carrier autonomously selected by the UE, a predefined carrier, and a carrier pre-agreed by the base station and the UE.

The carrier may be understood as one or more subcarriers, RBs, RBGs or sub-bands on a certain one or more of frequency domain resources.

The frequency domain resources may be PRB, the RBG, the sub-band or a certain bandwidth, or may be a combination of one or more of the above resources thereof.

The one or more subcarriers or carriers may belong to: the same RB, the same RBG, the same sub-band, the same bandwidth, different RBs, different RBGs, different sub-bands, or certain different bandwidths.

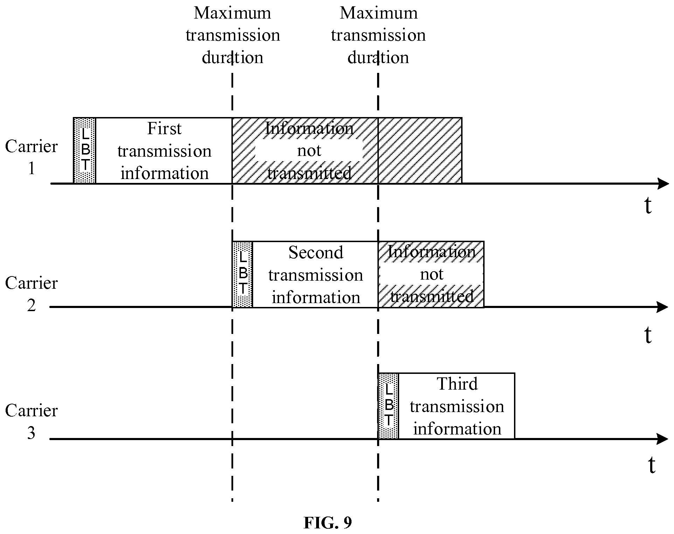

FIG. 9 shows that the information is transmitted in a manner of preemption of multiple carriers. In a sense, the carrier may be considered as a subcarrier, but in another sense, the carrier cannot be equal to the subcarrier. It is assumed that a carrier 1, a carrier 2 and a carrier 3 can be used for the transmission node to transmit the information. If the transmission node obtains the use right of the carrier 1 through the competition before transmitting the information, the information is transmitted on the carrier 1. If the transmission duration on the carrier 1 exceeds the maximum transmission duration limit required in the regulation of the unlicensed carrier, the current transmission is stopped. The use right of the unlicensed carrier is re-competed for on the three available carriers, the carrier 1, the carrier 2 and the carrier 3. If the use right of the carrier 2 is obtained through the competition, the transmission node continues to transmit the remaining information on the carrier 2. If the information transmission is not completed on the carrier 2, the use right of at least one of the three carriers needs to be continuously competed for, so that the remaining information may be transmitted on the carrier which is successfully competed for. The rest are done in the same manner until the to-be-transmitted information is transmitted completely.

Manner 3: The belonging in the frequency domain of the transmission manner on one carrier or the multiple carriers or the multiple subcarriers described in the manner 1 and/or the manner 2 is expanded from one RB, one RBG, one sub-band, a certain bandwidth or one or more of combinations thereof to one or more adjacent RBs, an adjacent RBG, an adjacent sub-band, a certain bandwidth or one or more of combinations thereof, or is expanded/extended to one or more nonadjacent RBs, a nonadjacent RBG, a nonadjacent sub-band, a certain bandwidth or one or more of combinations thereof.
Case 1: The transmission node itself needs the multiple carriers, the multiple subcarriers, the multiple RBs, the multiple RBGs, the multiple sub-bands, a certain bandwidth, or one or more of combinations thereof; or the transmission node has an aggregation capability of the multiple carriers, the aggregation capability of the multiple subcarriers, the aggregation capability of the multiple RBs, the aggregation capability of the multiple RBGs, the aggregation capability of the multiple sub-bands, the aggregation capability of the certain bandwidth, or the aggregation capability of one or more of combinations thereof. But, at every time of transmission, the transmission node occupies only one carrier, one subcarrier, one RB, one RBG or one bandwidth among the multiple carriers, the multiple subcarriers, the multiple RBs, the multiple RBGs, the multiple sub-bands, the certain bandwidth, or one or more of combinations thereof.
Case 2: The transmission node itself needs the multiple carriers, the multiple subcarriers, the multiple RBs, the multiple RBGs, the multiple sub-bands, a certain bandwidth, or one or more of combinations thereof; or the transmission node has the aggregation capability of the multiple carriers, the aggregation capability of the multiple subcarriers, the aggregation capability of the multiple RBs, the aggregation capability of the multiple RBGs, the aggregation capability of the multiple sub-bands, the aggregation capability of the certain bandwidth, or the aggregation capability of one or more of combinations thereof. If the CCA detection is performed successfully on the multiple carriers, the multiple subcarriers, the multiple RBs, the multiple RBGs, the multiple sub-bands, the certain bandwidth, or one or more of combinations thereof, the transmission node occupies the multiple carriers, the multiple subcarriers, the multiple RBs, the multiple RBGs, the multiple sub-bands, the certain bandwidth, or one or more of combinations thereof on which the CCA detection is successfully performed to perform the transmission.
Case 3: The transmission node itself needs the multiple carriers, the multiple subcarriers, the multiple RBs, the multiple RBGs, the multiple sub-bands, a certain bandwidth, or one or more of combinations thereof; or the transmission node has an aggregation capability of the multiple carriers, the aggregation capability of the multiple subcarriers, the aggregation capability of the multiple RBs, the aggregation capability of the multiple RBGs, the aggregation capability of the multiple sub-bands, the aggregation capability of the certain bandwidth, or the aggregation capability of one or more of combinations thereof. If the number of carriers, subcarriers, RBs, RBGs or bandwidths on which the CCA detection is successfully performed among the multiple carriers, the multiple subcarriers, the multiple RBs, the multiple RBGs, the multiple sub-bands, the certain bandwidth, or one or more of combinations thereof is not less than a preset number, the transmission node occupies the preset number of carriers, subcarriers, RBs, RBGs or bandwidths to perform the transmission. The preset number may be predefined, may be pre-agreed by the base station and the UE, may be indicated through the physical layer DCI to the UE, or may be notified through higher layer RRC signaling.

For the three cases described above, for example, when the transmission is performed on one or more RBs or sub-bands on which the CCA is performed successfully, one or more subcarriers or RBs corresponding to the RBs or sub-bands may be occupied to perform the transmission. An index or a mark number of the corresponding subcarrier or RB in the RBs or the subcarriers is predefined, is pre-agreed by the base station and the UE, is indicated by the base station to the UE through the physical layer DCI signaling, or is notified through the higher layer RRC signaling.

### Application embodiment 2

Before the transmission is performed on the unlicensed carrier, requirements of the LBT mechanism need to be performed. At the time when the transmission node performs the LBT successfully before the transmission starts, and the starting time of the actual transmission is not reached, in order to prevent the channel from being occupied by other nodes, a method for processing a blank between the LBT success time and the starting time of the actual transmission is required. In view of this, the embodiment provides a method for processing the blank between the LBT success time and the time of the actual transmission.
Manner 1: Sparse occupancy signals are transmitted at the blank.
Manner 2: The occupancy signals are transmitted in the entire frequency domain of the blank. Manner 3: The LBT mechanism is performed. For example, a catogery2 listen before talk (Cat2 LBT) may be adopted.

The transmission starting time of a physical downlink control channel (PDSCH), a physical uplink shared channel (PUSCH), an xPDSCH or an xPUSCH may start from one of a symbol level, a short TTI level, a time slot level, a subframe boundary and any time within the symbol. The x in xPDSCH or the xPUSCH represents a new scenario in the future, a new technology, a new service, or a PDSCH or a PUSCH in a new system. For example, it may be, but is not limited to, a short TTI, an enhanced MTC (eMTC), a URLLC, an mMTC, an eMBB, or a license assisted access (LAA). The short TTI is composed of n symbols. N may be one of 1, 2, 3, 4, 5, 6, 7, 8, 9, 10, 11, 12, etc. One subframe may be composed of multiple short TTIs. The number of short TTIs in one subframe depends on the number of symbols in the short TTIs. For example, the transmission starting time of the PDSCH, the PUSCH, the xPDSCH or the xPUSCH may be a symbol index number PI, a short TTI index number P2, or a time slot index number P3. P1 may be one of [0, 11] or one of [0, 13]. P2 may be one of [0, 6]. P may be 0 or 1.

If the LBT success time is earlier than the transmission starting time, the occupancy signal is transmitted between the LBT success time and the starting time of data transmission. For the occupancy signal, the base station needs to give the indication to the UE so that the UE can transmit the occupancy signal. For a base station side, no occupancy signal duration information needs to be transmitted. The occupancy signal duration information may be determined according to the data transmission time and the LBT success time, or the base station may notify the duration information of occupancy signal transmission. That is, a field for indicating whether the occupancy signal is transmitted and or an occupancy signal duration field need to be transmitted in DCI signaling. The DCI signaling may be at least one of DCI format 0, DCI format 0A, DCI format 0B, DCI format 1, DCI format 1A, DCI format 1B, DCI format 1C, DCI format 1D, DCI format 2, DCI format 2A, DCI format 2B, DCI format 2C, DCI format 2D, DCI format 3, DCI format 3A, DCI format 4, DCI format 4A, and DCI format 4B.

If the LBT success time is later than the transmission starting time, the transmission node abandons the current transmission; or transmits the occupancy signal during the time from the LBT success time to a next transmission starting time. As above, whether to transmit the occupancy signal needs the base station to give the indication to the UE.

### Application embodiment 3

The embodiment provides a processing manner of multiplexing between multiple UEs. The manner of multiplexing between different base stations under a same operator, or the manner of multiplexing between different base stations in the same system is the same as the processing manner on the UE side. The terminal side is only taken as an example herein. When multiple users adopt the time division multiplexing (TDM) manner, in order to enable other users to multiplex the resources of the user which has occupied the channel, one of following manners may be adopted.

Manner 1: The specific resource in the transmission unit of the user which has occupied the channel is punctured or blanked.

The transmission unit may be composed of at least one of: downlink control and downlink data; downlink control, downlink data and uplink control; downlink control and uplink data; downlink control, uplink data and uplink control; downlink control, uplink data and a blank resource (such as a symbol); downlink control, downlink data, uplink data and a blank resource; downlink control, uplink data and a blank resource; and downlink control, uplink data, uplink control and a blank resource.

In addition, the transmission unit may be a regular TTI or a short TTI or may be composed of L short TTIs or multiple regular TTIs. L is an integer greater than or equal to 1, or equal to 1. For example, L may be 1, 2, 3, 4, 5, 6, 7, 8, 9 or 10. The short TTI is composed of n symbols. N may be one of 1, 2, 3, 4, 5, 6, 7, 8, 9, 10, 11, 12, etc.

The blank resource position or the resource in the punctured transmission unit may be in one or more of following positions: a starting of the transmission unit, an end of the transmission unit and a specific position in the transmission unit. The size of the blank resource position or the resource in the punctured transmission unit may be a time period of one or more microseconds, a time period which is not greater than one symbol, a symbol, m symbols, a short TTI, or multiple short TTIs. The values of n and m may be predefined, or may be determined in a predefined manner by the base station and the UE, or may be determined according to one or more of following content: a service type, a scenario, a design requirement, and a technical characteristic, or may be determined according to an indication given by the base station to the UE through the DCI signaling, or determined according to the higher layer RRC signaling. The blanking resource or puncturing the resource in the transmission unit may be to blank an entire frequency domain resource, puncture the entire frequency domain resource in the time domain resource in the transmission unit, blank the specific resource in the entire frequency domain, or puncture the specific resource of the entire frequency domain in the time domain resource in the transmission unit. The specific frequency domain resource may be equally spaced or unequally spaced in the entire frequency domain. The granularity of the specific resource may be a subcarrier, an RB, an RBG or a sub-band.

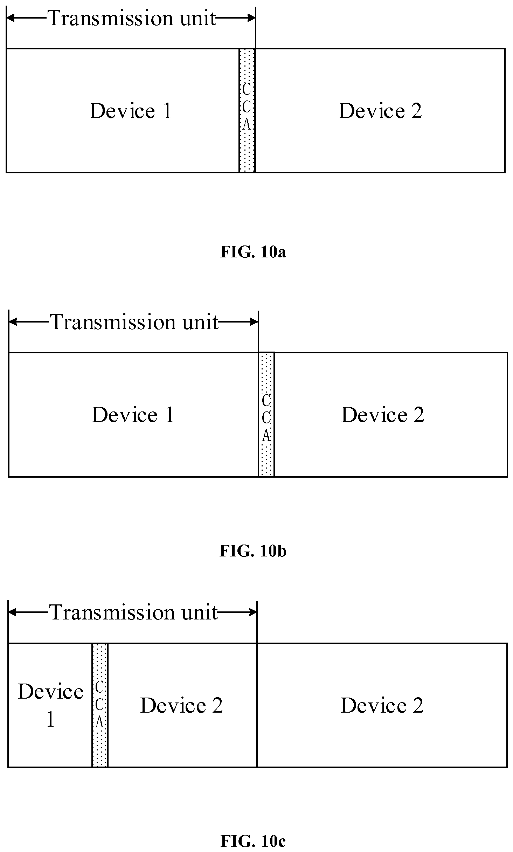

In FIG. 10, FIG. 10a is a schematic diagram of the blank resource position or the punctured resource position at the end of the transmission unit. FIG. 10b is a schematic diagram of the blank resource position or the punctured resource position at the starting of the transmission unit. FIG. 10c is a schematic diagram of the blank resource position or the punctured resource position in a specific position in the transmission unit. The specific position may be pre-agreed by the base station and the UE, may be predefined, may be indicated by the base station to the UE through the DCI signaling, or may be determined through the higher layer RRC signaling.

Manner 2: One transmission interval is reserved or blanked between the ending of the previous transmission unit and the starting of the current transmission unit.

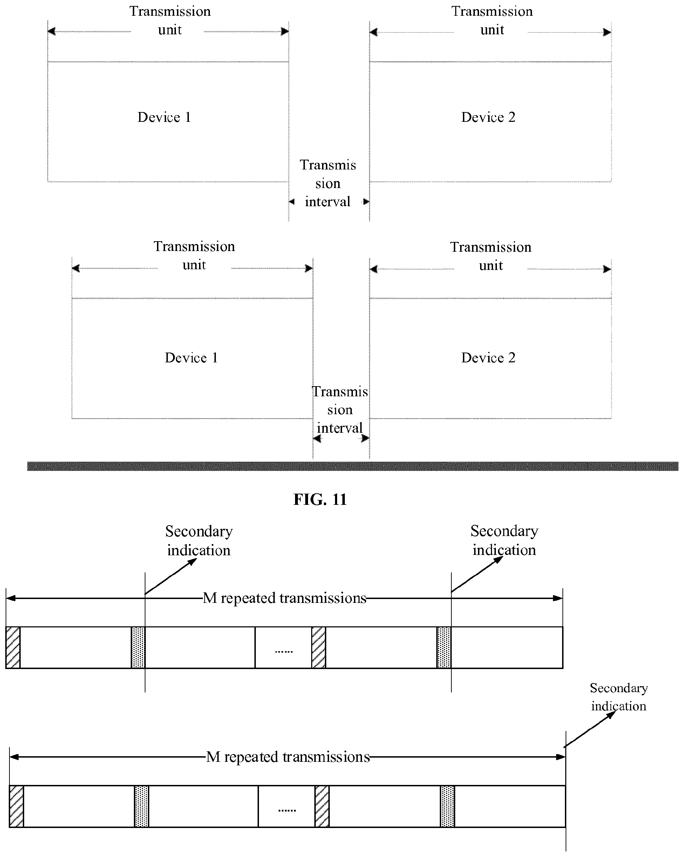

In order to prevent the transmission delay due to the LBT result to cause interference to the transmission of a next user, one interval is reserved between the transmissions of two users. The length of the interval and/or the starting point of the interval may be notified by the base station to the UE through the DCI signaling, may be predefined, may be pre-agreed by the base station and the UE, or may be notified through the higher layer RRC signaling. FIG. 11 is a schematic diagram of one reserved or blanked transmission interval between the ending of the previous transmission unit and the starting of the current transmission unit, and the reserved or blanked transmission interval is used for providing abundant time or an opportunity for competition access.

Manner 3: A specific indication signal is added during the transmission, for a multiplexed user to perform identification.

Manner 3 is that the user which occupies the channel and is performing the transmission transmits a specific indication signal during the transmission, and a user which detects the specific indication signal may multiplex the resource of the user which has occupied the channel. The transmission starting time of the multiplexed user may be started from a first symbol after the specific indication signal, or from the position of a specific symbol, or from the boundary of a first short TTI. The specific indication signal may be a DMRS, an SRS, a CRS, a DRS, a PSS, an SSS, a Preamble or a predefined signal.

The specific indication signal may be transmitted in the entire frequency domain or may be transmitted in part frequency domain positions in the entire frequency domain.

When multiple users adopt the frequency division multiplexing manner or the non-orthogonal multiple access multiplexing manner, multiple users perform the LBT mechanism before the transmission starting time. When a user first completes the LBT process and the LBT success time does not reach the transmission starting time, the user which first performs successfully the LBT needs to transmit the occupancy signal until the transmission starting time. At this time, the occupancy signal transmitted by the user which first completes the LBT will block a user which is performing the LBT from preforming the CCA detection. That is, the user which first completes the LBT may transmit the sparse occupancy signal in the entire frequency domain or transmit the occupancy signal on the entire frequency domain bandwidth, for the multiplexed user or device to perform the CCA detection or identification.

In order to prevent the block between the users, the transmission node may perform one of operations: only transmit the occupancy signal in the specific frequency domain resource on the entire bandwidth, only transmit the occupancy signal in the frequency domain position corresponding to the scheduling resource, only transmit the occupancy signal in the frequency domain resource position of the transmission thereof, and carry at least one of the following in the occupancy signal transmitted: a cell identifier, an operator identifier, a base station identifier, a multiplexing identifier, a designated identifier, a service type identifier and a scenario identifier.

The detection node may perform one of following operations: an operation of only performing the CCA detection in the specific frequency domain resource position on the entire bandwidth; an operation of only performing the CCA detection in the frequency domain position corresponding to the frequency domain resource of the transmission thereof; an operation of only performing the CCA detection in the scheduled frequency domain resource position; and an operation of detecting the channel, and in response to detecting that the channel is busy, parsing the received signal so as to determine whether the multiplexing may be performed.

The transmission node performing the detection may perform the CCA detection in the blank resource in the occupancy signal transmitted by the transmission node, and determine whether the multiplexing can be performed or whether the channel is idle according to the result of the detection in the blank resource, the detection on the entire bandwidth, or the detection in the frequency domain resource transmitting the occupancy signal. The CCA detection threshold in the blank resource may be different from the CCA detection threshold in the frequency domain resource transmitting occupancy signal. Optionally, it is determined by receiving the occupancy signal, and parsing and identifying the content in the occupancy signal whether the channel is available.

### Application embodiment 4

In the embodiment, a size of a new TBsize is defined according to the maximum transmission duration limit in the regulation, so that the new TBsize satisfies the regulatory requirement for the transmission duration on the unlicensed carrier.

Taking the NB-IoT as an example, since the subcarrier interval of 3.75kHz is introduced, one time of RU transmission needs 32ms. The maximum transmission duration on the unlicensed carrier may be 8ms, 10ms or 4ms. Obviously, for the NB-IoT scenario or the NB-IoT service, one time of RU transmission does not satisfy the requirement for the transmission duration limit in the regulation. Each transmission may be enabled to satisfy the regulatory requirement on the unlicensed carrier from a scheduling perspective. For example, the TBsize is divided smaller, so that the RU transmission corresponding to the small TBsize satisfies the transmission duration limit of the regulatory requirement.

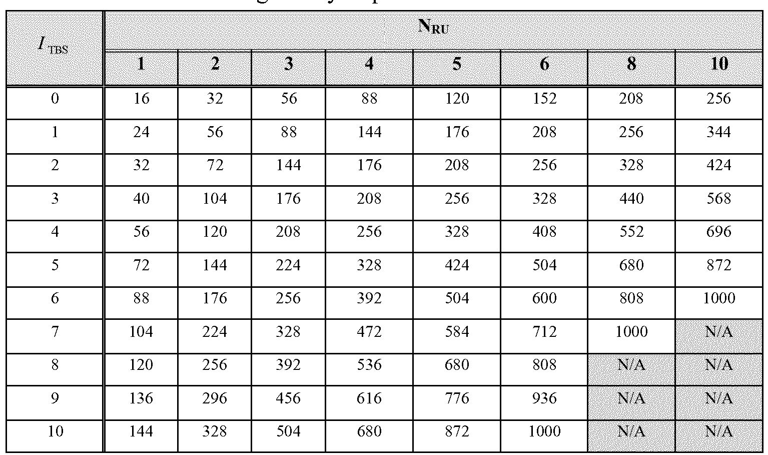

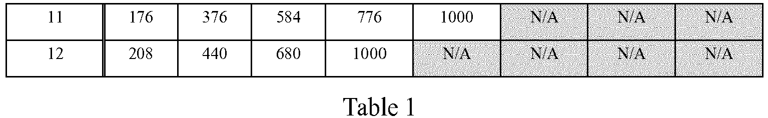

Table 1 shows the size of TBsizes corresponding to different RUs. Taking I_{TBS}=0 and N_{RU}=1 as examples, the corresponding TBsize is equal to 16. For the subcarrier interval of 3.75kHz, when TBsize is 16, the corresponding transmission duration is 32ms. In view of this, the corresponding TBsize is divided into 8 equal parts. Each small TBsize is 2, and the corresponding transmission duration is 4ms, thereby satisfying the regulatory requirement on the unlicensed carrier.

One UL grant schedules the 8 small TBsizes at the same time, and configures different timing relationships, that is, in the manner of scheduling respectively 8 small TBsizes. In addition, the repeated transmission may be repeated after all small TBsizes are transmitted, or each small TB block may be repeatedly transmitted independently.

The method provided in the embodiment may also applicable to the problem in which the transmission duration exceeds the maximum transmission duration limit in the regulatory requirement in other scenarios and technologies (for example, the mMTC in the NR, the URLLC, the eMBB, the short TTI, the communication between vehicles and between the vehicle and the base station (vehicle-to-X, V2X) and the like).

Additionally, it is to be noted that rule of the number of times of the repeated transmission shown in application embodiments 5 and 6, and/or the rule of the starting point of the repeated transmission are not only applicable to the repeated transmission based on one time of transmission, but also applicable to the repeated transmission based on at least one of multiple times of segmentation transmission in one time of repeated transmission. However, that is not limited to the above situations, and also may be used in other situations and/or scenarios related to the repeated transmission or multiple times of transmission. The content of the repeated transmission and/or the content of multiple times of transmission may be the same or may be different. The repeated transmission may include signal and/or channel repeated transmission, and for example, includes at least one or more of the following: data channel repeated transmission, control channel repeated transmission, control signal repeated transmission, reference signal repeated transmission, and indication signal repeated transmission.

Since the LBT mechanism is introduced into the unlicensed carrier, the LBT detection result can directly impact the coverage capability of the unlicensed carrier. In view of this, the embodiment provides a manner for setting the number of times of repeated transmission on the unlicensed carrier.

Manner 1: Compared with the number of times of repeated transmission on the licensed carrier, the number of times of repeated transmission on the unlicensed carrier is set to be the same as the number of times of repeated transmission on the licensed carrier.

For manner 1, there are two situations.

The first situation is that the number of times of successful LBT (equal to the number of times of transmission or the number of times of repeated transmission) on the unlicensed carrier is the same as the number of times of repeated transmission on the licensed carrier.

For example, on the licensed carrier, the number of times of repeated transmission is 4. According to the manner 1, the number of times of repeated transmission on the unlicensed carrier is also 4. Assuming that for the first transmission, the LBT is performed successfully before the first transmission, the transmission node considers acquiring the use right of the unlicensed carrier and performs the first transmission. If the LBT is failed before the first transmission, the transmission node does not abandon the first transmission and continues to perform the LBT until the LBT is performed successfully, and then performs the first transmission. The situation is the same to the second transmission, the third transmission, the fourth transmission, ..., and the Nth transmission.

The second situation is that regardless of whether the LBT is performed successfully on the unlicensed carrier, the number of times of LBT performed by the transmission node (the total of the number of time of successful LBT and/or the number of times of failed LBT) is the same as the number of times of repeated transmission on the licensed carrier.

For example, on the licensed carrier, the number of times of repeated transmission is 4. According to the manner 1, the number of times of repeated transmission on the unlicensed carrier is also 4. If the transmission node performs the LBT successfully before performing the first transmission, the transmission node can perform the first transmission. Otherwise, if the transmission node fails to perform the LBT before performing the first transmission, the transmission node abandons the current transmission. When the LBT is performed successfully at a next time and the use right of the unlicensed carrier is obtained through the competition, one time of transmission is performed (which may be considered to be the first transmission, or, for the entire transmission, which is the second transmission). At this time, the transmission node only remains two times of transmission. If in only one of two remaining transmission opportunities, the LBT is performed successfully and the transmission is performed, the entire transmission actually only performs two times of repeated transmission. To some extent, the coverage capability on the unlicensed carrier is weaker than the coverage capability on the licensed carrier.

Manner 2: The number of times of the repeated transmission on the unlicensed carrier is set to be greater than the number of times of repeated transmission on the licensed carrier.

For the manner 2, since the LBT is introduced into the unlicensed carrier, the number of times of the repeated transmission on the unlicensed carrier is not necessarily equal to the set number of times of repeated transmission or the number of times of repeated transmission indicated by the signaling.

Assuming that the number of times of repeated transmission on the unlicensed carrier is M, if the transmission node performs the LBT successfully before the repeated transmission, the transmission is performed. Otherwise, if the LBT is failed, the current transmission is abandoned. Regardless the LBT result, as long as the number of times of LBT is M, it is considered that the M times of repeated transmission are completed on the unlicensed carrier. However, due to the failed LBT before at least one of M times of repeated transmission, the current transmission actually cannot be performed.

Manner 3: The number of times of repeated transmission on the unlicensed carrier is determined according to the statistical value within a period of time.

The statistical value may include at least one of: the number of times of failed LBT, the number of times of successful LBT, the number of times of successful repeated transmission, and the number of times of failed repeated transmission. The initial number of times of repetition may be determined according to the number of times of repetition on the licensed carrier, may be determined according to the number of times of repetition determined in the process of UE random access on the unlicensed carrier, may be predefined, may be notified through the physical layer DCI signaling, or may be determined according to the higher layer RRC signaling.

At this time, on the basis of the above method, for the situation in which the LBT is failed before performing the repeated transmission, the number of times of failed LBT may be indicated in a secondary indication mode, or the number of times may be supplemented.

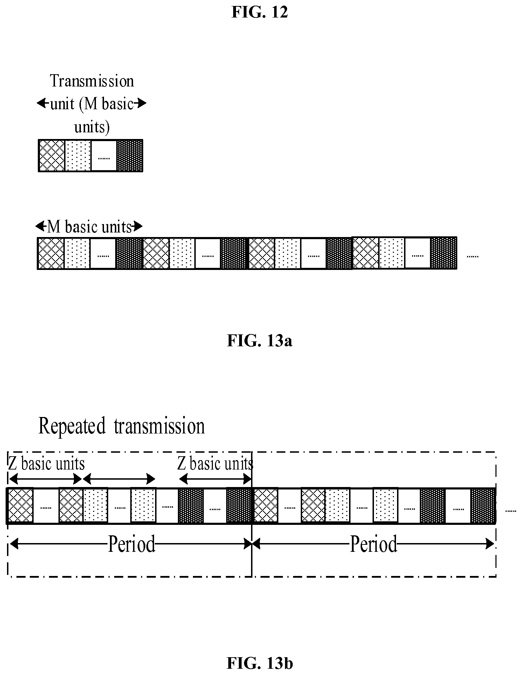

The secondary indication is transmitted at at least one of following times: after the current LBT fails; after the repeated transmission is completed; after the LBT first successes after the current LBT is failed; and when the number of times of failed LBT reaches a predetermined threshold. Details are shown in FIG. 12.

The secondary indication is transmitted after the current LBT fails, in a preset time after the all repeated transmission is completed, when the number of times of failed LBT reaches the preset threshold, or in a preset time window. The preset threshold is not greater than the set number of times of repeated transmission on the unlicensed carrier. The predetermined threshold may be determined according to at least one of following parameters: a starting point of the time window, a length, an end of the time window and an interval. In the preset time window, the secondary indication message may be transmitted at any time in the time window, may be transmitted in a fixed position in the tine window, or may be transmitted at multiple times in the time window. In addition, the secondary indication message may be transmitted in a fixed position or any position in a range.

At least one of the predetermined time, the predetermined time window, the preset threshold, and the determined parameters of the preset time window, may be predefined, may be pre-agreed by the base station and the UE, may be notified through the physical layer DCI signaling, or may be notified through the higher layer RRC signaling. For example, the predetermined time may be at least one of: 2us, 4us, 9us, 16us, and 25us. The preset time window may be at the symbol level, the time slot level, at the subframe level, or at the short TTI level.

The secondary indication may be transmitted on the unlicensed carrier or may be transmitted on the licensed carrier. If the secondary indication is transmitted on the unlicensed carrier, the transmission of the secondary indication may perform the LBT. In the transmission burst, the Cat1 LBT of 25us is performed. Outside the transmission burst, the Cat4 LBT is performed. The secondary indication may be configured with a higher propriety level, such as a level 1 and a level 2. If the LBT is performed successfully, the secondary indication is transmitted. In another example, the transmission of the secondary indication does not perform the LBT mechanism as long as the gap between the ending of the transmission and the transmission of the secondary indication is not less than a preset duration. The preset duration may be at least one of: 2us, 4us, 9us, 16us and 25us.

In addition, the number of times of repeated transmission may be pre-agreed by the base station and the UE, may be predefined, may be determined through the physical layer DCI signaling, or may be determined through the higher layer RRC signaling. The situation in which the number of times of repeated transmission is indicated through the physical layer DCI signaling is that the number of times of repeated transmission is indicated through the UL grant or the DL grant. That is, a repeated transmission field is carried in the DCI format, for indicating the number of times of repeated transmission on the unlicensed carrier and/or the number of times of repeated transmission on the licensed carrier. The number of times of repeated transmission on the unlicensed carrier is equal to, or greater than or equal to, or greater than the number of times of repeated transmission on the licensed carrier. In addition, the relationship between a set of times of repeated transmission on the unlicensed carrier may include, may be a subset of, may be a complementary set, or may not include a set of times of repeated transmission on the licensed carrier.

### Application embodiment 6

The embodiment provides a manner for setting the starting point of the repeated transmission on the unlicensed carrier.

The repeated transmission may include at least one of following manners.

It is to be noted that the transmission unit may be composed of M basic units. The basic unit may be one or more of: a symbol, a time slot, a subframe, a short TTI and a transmission segment. The transmission segment may be composed of one or more of the following: S symbols, the time slot, the subframe and the short TTI. The short TTI is composed of N symbols. N is not greater than the number of symbols in the subframe or is not greater than the number of symbols in the time slot. M, N and S may be notified through the physical layer DCI signaling, may be notified through the higher layer RRC signaling, may be predefined, or may be pre-agreed by the base station and the UE. The physical layer DCI signaling may be at least one of DCI format 0, DCI format 0A, DCI format 0B, DCI format 1, DCI format 1A, DCI format 1B, DCI format 1C, DCI format 1D, DCI format 2, DCI format 2A, DCI format 2B, DCI format 2C, DCI format 2D, DCI format 3, DCI format 3A, DCI format 4, DCI format 4A, and DCI format 4B.

Manner 2: The transmission is repeated according to the transmission unit, as shown in FIG. 13a.
Manner 2: The transmission is repeated according to the transmission unit, as shown in FIG. 13b. The transmission is repeated with Z times M basic units as a repetition period. When the number of times of repeated transmission exceeds the preset times, the value of Z is the preset times; otherwise, Z is equal to the number of times of repeated transmission. The number of times of repeated transmission is indicated by the DCI.
Manner 3: The transmission is repeated according to the RV or circularly repeated based on the RV. For example, the RV is 0, 1 or 2. The repeated transmission may be repeated for certain times according to the RV of 0, may be repeated for certain times according to the RV of 1, or may be repeated for certain times according to the RV of 2. In another example, the RV of 0, 1 and 2 as one time of repeated transmission, the transmission is repeated for certain times with the RV of 0, 1 and 2.
Manner 4: The transmission is repeated according to the segmentation transmission or circularly repeated based on the segmentation transmission. For example, one time of transmission is composed of four basic units, M1, M2, M3 and M4, and the transmission is performed in 4 segments. For example, the first segment transmission is M1, the second segment transmission is M2, the third segment transmission is M3 and the fourth segment transmission is M4. For the repeated transmission corresponding to the manner 4, for example, the first segment transmission M1 is repeated for certain times, the second segment transmission M2 is transmitted and repeated for certain times, then the third segment transmission M3 is transmitted and repeated for certain times, and the rest are done in the same manner. In another example, the M1, M2, M3 and M4 are first transmitted, and then the M1, M2, M3 and M4 are repeated for certain times.

The repeated transmission described above is performed under an ideal situation. However, on the unlicensed carrier, the LBT result impacts the repeated transmission. Therefore, on the unlicensed carrier, the starting point of each repeated transmission may be set according to one of following conditions.
Condition 1: The starting position of each repeated transmission is fixed. If the transmission node fails to perform the LBT before the starting point of the repeated transmission, the current transmission is abandoned. Otherwise, if the LBT is successful, the transmission is performed. In another example, an offset is introduced between two times of repeated transmission. As long as the transmission device performs the LBT successfully in the offset between two times of repeated transmission, or performs the LBT successfully in the time from the ending of the previous time of transmission to the offset, the transmission node starts the current transmission in the starting position of the repeated transmission.
   The fixed starting position of each repeated transmission may be notified through the physical layer DCI signaling, may be notified through the higher layer RRC signaling, may be predefined, or may be pre-agreed by the base station and the UE.
Condition 2: The starting position of each repeated transmission is dynamically determined. That is, a time window is configured for each repeated transmission, and as long as the transmission node performs the LBT successfully in the time window, the current transmission is performed. Otherwise, if the LBT is failed, the LBT continues to be performed. If the LBT is failed all the time in the time window, the current transmission is abandoned. The time window may be before the repeated transmission, may be contain the repeated transmission, or may be disposed after the repeated transmission. The basic unit in the time window may be the symbol, the time slot, the subframe, or the short TTI (composed of multiple symbols). In the time window, multiple transmission starting positions may be set, and each transmission starting position may be consecutive in the time domain or discrete in the time domain.

As long as the transmission node performs the LBT successfully at any time in the time window, the current transmission may be started. In another example, when the transmission node performs the LBT successfully before a certain transmission starting time set in the time window, the transmission may be started at the certain transmission starting time. The certain transmission starting time may be a fixed position in the time window or may be randomly selected in the time window. The certain transmission starting time may be notified through the physical layer DCI signaling, may be notified through the higher layer RRC signaling, may be predefined, or may be pre-agreed by the base station and the UE.

In addition, the first repeated transmission may adopt the first LBT mechanism, and the subsequent repeated transmission may adopt the second LBT mechanism.

If the first repeated transmission fails to perform the LBT, the second repeated transmission may adopt the first LBT mechanism adopted by the first repeated transmission.

In another example, if the first repeated transmission fails to perform the LBT, the second repeated transmission performs the competition-based access of the channel according to an LBT mechanism indicated by the base station or according to a preset LBT mechanism.

In another example, if the first repeated transmission fails to perform the LBT, the second repeated transmission performs the competition-based access of the channel according to the second LBT mechanism.

If the first repeated transmission performs the LBT successfully, the second repeated transmission may not perform the LBT mechanism. If the gap between the ending of the first repeated transmission and the second repeated transmission is not greater than the preset duration, the LBT may not be performed and the transmission may be directly preformed.

In another example, if the first repeated transmission performs the LBT successfully, the second repeated transmission performs the competition-based access of the channel according to the LBT mechanism indicated by the base station or according to the preset LBT mechanism.

The first LBT mechanism and the second LBT mechanism may be the Cat2 LBT and/or the Cat4 LBT. The first repeated transmission may be considered to be the previous repeated transmission, and the second repeated transmission may be considered to be the current repeated transmission.

For the situation in which different transmission nodes multiplex the resource to perform each repeated transmission, following manners may be adopted:
each repeated transmission allows the multiplexing between the transmission nodes;
whether each repeated transmission allows the multiplexing depends on whether the current repeated transmission performs the LBT successfully;
the first repeated transmission does not allow the multiplexing, and the subsequent repeated transmission allows the multiplexing between the transmission nodes;
the first repeated transmission allows the multiplexing, and the subsequent repeated transmission does not allow the multiplexing between the transmission nodes;
if the first repeated transmission performs the LBT successfully, the multiplexing between the transmission nodes is allowed, and the subsequent repeated transmission allows the multiplexing between the transmission nodes;
if the first repeated transmission performs the LBT successfully, the multiplexing between the transmission nodes is allowed, and the subsequent repeated transmission does not allow the multiplexing between the transmission nodes;
if the first repeated transmission performs the LBT successfully, the multiplexing between the transmission nodes is not allowed, and the subsequent repeated transmission allows the multiplexing between the transmission nodes; or
if the first repeated transmission performs the LBT successfully, the multiplexing between the transmission nodes is not allowed, and the subsequent repeated transmission does not allow the multiplexing between the transmission nodes.

In a word, whether the multiplexing between the transmission nodes is allowed depends on the LBT result (succeed or failed) and/or which time of the repeated transmission is.

It is to be understood that the device and the method disclosed in embodiments of the present invention may be implemented in other ways. The device embodiments described above are merely illustrative. For example, the unit division is merely a logical function division, and, in practice, the unit division may be implemented in other ways. For example, multiple units or components may be combined or may be integrated into another system, or some features may be omitted or not executed. In addition, coupling, direct coupling or communication connection between the presented or discussed components may be indirect coupling or communication connection, via interfaces, between devices or units, and may be electrical, mechanical or in other forms.

The units described above as separate components may or may not be physically separated. Components presented as units may or may not be physical units, that is, may be located in one place or may be distributed over multiple network units. Part or all of these units may be selected according to actual requirements to achieve objects of the solutions in the embodiments of the present invention.

Moreover, various function units in embodiments of the present invention may all be integrated in one processing module, or each unit may be used as a separate unit, or two or more units may be integrated into one unit. The integrated function unit may be implemented by hardware or may be implemented by hardware plus a software function unit.

It may be understood by those skilled in the art that all or part of the steps in the method embodiments described above may be implemented by hardware related to program instructions, these programs may be stored in a computer-readable storage medium, and, when executed, these programs execute steps included in the method embodiments described above; and the preceding storage media includes various media capable of storing program codes, such as a removable storage device, a read-only memory (ROM), a random access memory (RAM), a magnetic disk or an optical disk.

The above are only embodiments of the present invention and are not intended to limit the present invention. It is easy for those skilled in the art to conceive modifications or substitutions within the technical scope of the present invention. These modifications or substitutions are within the scope of the present invention. Therefore, the protection scope of the present invention is subject to the protection scope of the claims.

### INDUSTRIAL APPLICABILITY

The information transmission method, the transmission node and the transmission system provided in the embodiments of the present invention, to some degree, solve the problem where in some scenarios, one transmission duration fails to satisfy regulatory requirements in an unlicensed carrier for a maximum transmission duration and the problem where when a channel condition is poor, a coverage capability on the unlicensed carrier is insufficient due to a high probability of LBT failure.

## Claims

1. An information transmission method, comprising:
performing information segmentation on predetermined information to form information segments; and
transmitting the information segments using a predetermined spectrum.

2. The method according to claim 1, wherein
the predetermined spectrum comprises one of an unlicensed spectrum, a shared spectrum and a licensed spectrum.

3. The method according to claim 1, wherein the transmitting the information segments using a predetermined spectrum comprises:
performing a clear channel assessment, CCA, detection on the predetermined spectrum, and acquiring N transmission units for transmitting the information segments; and
transmitting the information segments respectively using the N transmission units.

4. The method according to claim 3, wherein the performing a CCA detection on the predetermined spectrum, and acquiring N transmission units for transmitting the information segments comprises:
performing the CCA detection on the predetermined spectrum and acquiring the N transmission units for transmitting the information segments on one carrier or on a subcarrier.

5. The method according to claim 4, wherein the performing the CCA detection on the predetermined spectrum and acquiring N transmission units for transmitting the information segments on one carrier or on one subcarrier comprises: after transmitting by using m transmission units is completed, performing the CCA detection on the predetermined spectrum, and acquiring transmission units for transmitting the information segments on the same carrier or on the same subcarrier, wherein m is a positive integer which is not greater than N.

6. The method according to claim 3, wherein the method further comprises:
in response to not acquiring the transmission units for transmitting the information segments, continuously performing the CCA detection on the predetermined spectrum, or abandoning the current transmission or the transmission of the information segments.

7. The method according to claim 3, wherein the performing a CCA detection on the predetermined spectrum and acquiring N transmission units for transmitting the information segments comprises:
performing the CCA detection on the predetermined spectrum and acquiring the N transmission units for transmitting the information segments on multi-carrier or on multi-subcarrier.

8. The method according to claim 7, wherein the performing the CCA detection on the predetermined spectrum and acquiring the N transmission units on multi-carrier or on multi-subcarrier comprises:
before transmitting the information segments, performing the CCA detection on the multi-carrier or on the multi-subcarrier, and acquiring at least one of the multi-carrier and multi-subcarrier as the transmission units for transmitting the information segments.

9. The method according to claim 3, wherein the performing a CCA detection on the predetermined spectrum and acquiring N transmission units for transmitting the information segments comprises:
performing the CCA detection on the predetermined spectrum and acquiring the N transmission units in a specific frequency domain resource.

10. The method according to claim 9, wherein the performing the CCA detection on the predetermined spectrum and acquiring the N transmission units in a specific frequency domain resource comprises:
transmitting the information segments using the N transmission units on one of a resource block, RB, a resource block group, RBG, a sub-band, and one or more subcarriers in a specific bandwidth;
transmitting the information segments using the N transmission units on one of multiple RBs, multiple RBGs, multiple sub-bands, and multiple specific bandwidths, wherein one or more subcarriers per specific bandwidth;
transmitting the information segments using the N transmission units on one of an RB, an RBG, a sub-band, and a specific bandwidth; or
transmitting the information segments using the N transmission units on one of multiple RBs, multiple RBGs, multiple sub-bands, and multiple specific bandwidths.

11. The method according to any one of claims 3 to 10, further comprising:
in response to determining that a successful time of the CCA detection is earlier than a starting time of the transmission unit, transmitting an occupancy signal or a reservation signal in a blank resource between the successful time of the CCA detection and the starting time of the transmission unit.

12. The method according to claim 11, further comprising:
in response to determining that the successful time of the CCA detection is later than the starting time of the transmission unit, abandoning current data transmission; or transmitting the occupancy signal or the reservation signal in a blank resource between the successful time of the CCA detection and a starting time of a next transmission unit.

13. The method according to claim 11 or 12, wherein the occupancy signal or the reservation signal is transmitted by a base station through an indication of a physical layer downlink control information, DCI signaling; and
wherein the physical layer DCI signaling comprises one of: DCI format 0, DCI format 0A, DCI format 0B, DCI format 1, DCI format 1A, DCI format 1B, DCI format 1C, DCI format 1D, DCI format 2, DCI format 2A, DCI format 2B, DCI format 2C, DCI format 2D, DCI format 3, DCI format 3A, DCI format 4, DCI format 4A and DCI format 4B.

14. The method according to claim 12, wherein a frequency domain position at which the occupancy signal or the reservation signal is transmitted comprises one of:
a specific frequency domain resource in an entire transmission bandwidth, a frequency domain resource corresponding to a scheduling resource in the entire transmission bandwidth, and a frequency domain recourse corresponding to the entire transmission bandwidth.

15. The method according to any one of claims 3 to 10, further comprising:
multiplexing the transmission units on the predetermined spectrum by different transmission nodes to perform the transmission, which comprises:
multiplexing the transmission units on the predetermined spectrum by the different transmission nodes in a time division multiplexing mode or multiplexing the transmission units on the predetermined spectrum by the different transmission nodes in a frequency division multiplexing mode.

16. The method according to claim 15, wherein the multiplexing the transmission units on the predetermined spectrum by different transmission nodes to perform the transmission comprises:
puncturing or blanking at least one of a specific time domain resource and a specific frequency domain resource in the transmission unit of the transmission node which has occupied a channel, for the multiplexed transmission node to perform the CCA detection;
reserving or blanking an interval between a previous transmission unit and a current transmission unit, for the multiplexed transmission node to perform the CCA detection; or
transmitting a specific indication signal in the transmission unit, for the multiplexed transmission node to perform detection or identification.

17. The method according to claim 16, wherein
the specific indication signal comprises one of: a demodulation reference signal, DMRS, a sounding reference signal, SRS, a cell-specific reference signal, CRS, a discovery reference signal, DRS, a primary synchronization signal, PSS, a secondary synchronization signal, SSS, a preamble and a predefined signal.

18. The method according to any one of claims 1 to 10, wherein a number of repeated transmissions on the predetermined spectrum is M1.

19. The method according to claim 18, wherein
the number of the repeated transmissions or the number of successful CCA detections performed on the unlicensed spectrum is M2; or
the number of the CCA detections on the unlicensed spectrum is M2 no matter whether the CCA detection is successful on the unlicensed spectrum;
wherein M2 is not greater than M1.

20. The method according to claim 18 or 19, wherein
the number of the repeated transmissions on the unlicensed spectrum is M1, and the number of the repeated transmissions on the licensed spectrum is M3, wherein M1 is greater than M3.

21. The method according to claim 20, wherein
the actual number of the repeated transmissions on the unlicensed spectrum depends on the number of successful listen-before-talks (LBTs).

22. The method of any one of claims 18 to 20, wherein the number of the repeated transmissions on the predetermined spectrum is determined by one of the following ways: pre-defining, indicating through a physical layer control channel information, DCI, signaling, indicating through a higher layer radio resource control, RRC, signaling, and determining according to a statistical value within a period of time.

23. The method according to claim 22, wherein the statistical value within a period of time comprises one of:
the number of failed LBTs within a period of time, the number of successful LBTs within a period of time, the number of successful repeated transmissions within a period of time, and the number of failed repeated transmissions within a period of time.

24. The method according to claim 19 or 21, wherein in a process of the repeated transmission, in response to determining that the transmission is not enabled to be performed due to the failed LBT, the method further comprises:
indicating the number of failed LBTs in a secondary indication mode; or
supplementing the number of the repeated transmissions.

25. The method according to claim 24, wherein the secondary indication is transmitted at one of:
a time after the current LBT fails;
a time after all the repeated transmissions are completed;
a time after an LBT first successes after the current LBT fails;
a time when the number of failed LBTs reaches a predetermined threshold; and
a time point at which the secondary indication is transmitted periodically.

26. The method according to any one of claims 1 to 10, wherein a starting point of a transmission of an information segment or a starting point of a repeated transmission of an information segment comprises:
a fixed starting point position or a dynamic starting point position.

27. The method according to claim 26, wherein the fixed starting point position comprises that:
between an ending of a previous transmission and a starting of a current transmission is consecutive in a time domain; or
between the ending of the previous transmission and the starting of the current transmission has an offset in the time domain.

28. The method according to claim 27, wherein
the fixed starting point position or the offset is notified by a physical layer control channel information, DCI, signaling, is notified by a higher layer RRC signaling, is predefined, or is pre-determined by a base station and a user equipment, UE, in advance.

29. The method according to claim 26, wherein the dynamic starting point position comprises:
determining the starting point of the transmission according to a successful time of performing LBT in a time window;
randomly selecting one of a plurality of predefined transmission starting points as the starting point of the transmission in the time window;
fixing one of a plurality of predefined transmission starting points as the starting point of the transmission in the time window; or
determining the starting point of the transmission according to the successful time of LBT.

30. The method according to claim 29, wherein
the time window is located in a transmission unit, the time window is located before a repeated transmission unit, the time window is located after a repeated transmission unit, or the time window contains a repeated transmission unit.

31. The method according to claim 29, wherein
a position of the time window is determined by one of following ways: notifying through a physical layer control channel information, DCI, signaling, notifying through a higher layer RRC signaling, predefining, and pre-determining by a base station and a UE in advance.

32. The method according to claim 18 or 20, wherein the repeated transmission comprises:
performing the repeated transmission according to the transmission units;
performing the repeated transmission with Z times M basic units as a repetition period; or
performing circular and repeated transmission based on a redundancy version, RV.

33. An information transmission method, comprising:
determining a regulatory duration of an unlicensed spectrum; and
according to the regulatory duration, determining a size of a transport block for performing data transmission by using the unlicensed spectrum.

34. An information transmission method, comprising:
in response to determining that a successful time of a clear channel assessment, CCA, detection is earlier than a starting time of a transmission unit, transmitting an occupancy signal or a reservation signal in a blank resource between the successful time of the CCA detection and the starting time of the transmission unit.

35. The method according to claim 34, further comprising:
in response to determining that the successful time of the CCA detection is later than the starting time of the transmission unit, abandoning current data transmission, or transmitting the occupancy signal or the reservation signal in the blank resource between the successful time of the CCA detection and a starting time of a next transmission unit.

36. The method according to claim 34 or 35, wherein the occupancy signal or the reservation signal is transmitted by a base station through an indication of a physical layer downlink control information, DCI, signaling; and
wherein the physical layer DCI signaling comprises one of: DCI format 0, DCI format 0A, DCI format 0B, DCI format 1, DCI format 1A, DCI format 1B, DCI format 1C, DCI format 1D, DCI format 2, DCI format 2A, DCI format 2B, DCI format 2C, DCI format 2D, DCI format 3, DCI format 3A, DCI format 4, DCI format 4A and DCI format 4B.

37. The method according to claim 34 or 35, wherein a frequency domain position at which the occupancy signal or the reservation signal is transmitted comprises one of:
a specific frequency domain resource in an entire transmission bandwidth, a frequency domain resource corresponding to a scheduling resource in the entire transmission bandwidth, and a frequency domain recourse corresponding to the entire transmission bandwidth.

38. An information transmission method, comprising:
multiplexing transmission units on a predetermined spectrum by different transmission nodes to perform transmission;
wherein the different transmission nodes multiplex the predetermined spectrum in a time division multiplexing mode or multiplex the predetermined spectrum in a frequency division multiplexing mode.

39. The method according to claim 38, wherein the multiplexing transmission units on a predetermined spectrum by different transmission nodes to perform transmission comprises:
puncturing or blanking at least one of a specific time domain resource and a specific frequency domain resource in the transmission unit of the transmission node which has occupied a channel, for the multiplexed transmission node to perform the CCA detection;
reserving or blanking an interval between a previous transmission unit and a current transmission unit, for the multiplexed transmission node to perform the CCA detection; or
transmitting a specific indication signal in the transmission unit, for the multiplexed transmission node to perform detection or identification.

40. The method according to claim 39, wherein
the specific indication signal comprises one of: a demodulation reference signal, DMRS, a sounding reference signal, SRS, a cell-specific reference signal, CRS, a discovery reference signal, DRS, a primary synchronization signal, PSS, a secondary synchronization signal, SSS, a preamble and a predefined signal.

41. A data transmission method, comprising:
transmitting predetermined information on a predetermined spectrum according to a preset number of repeated transmissions.

42. The method according to claim 41, wherein
the number of the repeated transmissions on the predetermined spectrum is M1.

43. The method according to claim 42, wherein
the number of the repeated transmissions or the number of successful CCA detections performed on an unlicensed spectrum is M2; or
the number of the CCA detections on the unlicensed spectrum is M2 no matter whether the CCA detection is successful on the unlicensed spectrum;
wherein M2 is not greater than M1.

44. The method according to claim 41 or 42, wherein
the number of the repeated transmissions on the unlicensed spectrum is M1, and the number of the repeated transmissions on the licensed spectrum is M3, wherein M1 is greater than M3.

45. The method according to claim 44, wherein
the actual number of the repeated transmissions on the unlicensed spectrum depends on the number of successful listen-before-talks, LBTs.

46. The method of claim 41, wherein the number of the repeated transmissions on the predetermined spectrum is determined by one of the following ways:
pre-defining, indicating through a physical layer control channel information, DCI, signaling, indicating through a higher layer radio resource control, RRC, signaling, and determining according to a statistical value within a period of time.

47. The method according to claim 46, wherein the statistical value within a period of time comprises one of:
the number of failed LBTs within a period of time, the number of successful LBTs within a period of time, the number of successful repeated transmissions within a period of time, and the number of failed repeated transmissions within a period of time.

48. The method according to claim 43 or 45, wherein in a process of the repeated transmission, in response to determining that the transmission is not enabled to be performed due to the failed LBT, the method further comprises:
indicating the number of failed LBTs in a secondary indication mode; or
supplementing the number of the repeated transmissions.

49. The method according to claim 48, wherein the secondary indication is transmitted at one of:
a time after the current LBT fails;
a time after all the repeated transmissions are completed;
a time after an LBT first successes after the current LBT fails;
a time when the number of failed LBTs reaches a predetermined threshold; and
a time point at which the secondary indication is transmitted periodically.

50. The method according to claim 42 or 44, wherein the repeated transmission comprises:
performing the repeated transmission according to the transmission units;
performing the repeated transmission with Z times M basic units as a repetition period; or
performing circular and repeated transmission based on a redundancy version, RV.

51. The method according to claim 41, wherein a starting point of the repeated transmission or a starting point of the transmission of the predetermined information comprises:
a fixed starting point position or a dynamic starting point position.

52. The method according to claim 51, wherein the fixed starting point position comprises that:
between an ending of the previous transmission and a starting of the current transmission is consecutive in the time domain; or
between the ending of the previous transmission and the starting of the current transmission has an offset in the time domain.

53. The method according to claim 52, wherein
the fixed starting point position or the offset is notified by a physical layer control channel information, DCI, signaling, is notified by a higher layer RRC signaling, is predefined, or is pre-determined by a base station and a user equipment, UE, in advance.

54. The method according to claim 51, wherein the dynamic starting point position comprises:
determining the starting point of the transmission according to an LBT successful time in a time window;
randomly selecting one of a plurality of predefined transmission starting points as the starting point of the transmission in the time window;
fixing one of the plurality of predefined transmission starting points as the starting point of the transmission in the time window; or
determining the starting point of the transmission according to the LBT successful time.

55. The method according to claim 54, wherein
the time window is located in a transmission unit, the time window is located before a repeated transmission unit, the time window is located after a repeated transmission unit, or the time window contains a repeated transmission unit.

56. The method according to claim 54, wherein
a position of the time window is determined by one of following ways: notifying through a physical layer control channel information, DCI, signaling, notifying through a higher layer RRC signaling, predefining, and pre-determining by a base station and a UE in advance.

57. A transmission node, comprising:
a segmentation unit (401), which is configured to perform information segmentation on predetermined information to form information segments; and
a communication unit (402), which is configured to use a predetermined spectrum to transmit the information segments.

58. A transmission node, comprising:
a first determination unit (501), which is configured to determine a regulatory duration of an unlicensed spectrum; and
a second determination unit (502), which is configured to, according to the regulatory duration, determine a size of a transport block for performing data transmission by using the unlicensed spectrum.

59. A transmission node, comprising:
a communication unit, which is configured to, in response to determining that a successful time of a clear channel assessment, CCA, detection is earlier than a starting time of a transmission unit, transmit an occupancy signal or a reservation signal in a blank resource between the successful time of the CCA detection and the starting time of the transmission unit.

60. A transmission system, comprising a plurality of transmission nodes, wherein:
transmission units on a predetermined spectrum are multiplexed by different transmission nodes to perform transmission;
the predetermined spectrum is multiplexed by different transmission nodes in a time division multiplexing mode; or
the predetermined spectrum is multiplexed by different transmission nodes in a frequency division multiplexing mode.

61. A transmission node, comprising:
the transmission node, which is configured to transmit predetermined information on a predetermined spectrum according to a number of repeated transmissions.
